(19) **Europäisches Patentamt**
**European Patent Office**
**Office européen des brevets**

(11) **EP 3 244 548 B1**

(12) **EUROPEAN PATENT SPECIFICATION**

(45) Date of publication and mention
of the grant of the patent:
**12.12.2018 Bulletin 2018/50**

(51) Int Cl.:
**H04B 7/0413** *(2017.01)*   **H04J 11/00** *(2006.01)*

(21) Application number: **17170120.4**

(22) Date of filing: **09.05.2017**

(54) **METHOD AND APPARATUS FOR REVISING ESTIMATES OF SYMBOLS CARRIED BY MODULATED SIGNALS TRANSMITTED ON A MIMO RADIO RELAY**

VERFAHREN UND VORRICHTUNG ZUR SCHÄTZUNGSKORREKTUR VON SYMBOLEN, DIE DURCH MODULIERTE SIGNALE AUF EINER MIMO FUNKSTRECKE ÜBERTRAGEN WERDEN

PROCÉDÉ ET APPAREIL POUR DES ESTIMATIONS RÉVISÉES DE SYMBOLES ADOPTÉES PAR DES SIGNAUX MODULÉS TRANSMIS SUR UN RELAIS DE RADIO MIMO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2016 IT UA20163410**

(43) Date of publication of application:
**15.11.2017 Bulletin 2017/46**

(73) Proprietor: **SIAE Microelettronica S.p.A.**
**20093 Cologno Monzese (MI) (IT)**

(72) Inventors:
• **ROSSI, Leonardo**
**20093 Cologno Monzese (MI) (IT)**
• **OLDONI, Matteo**
**20093 Cologno Monzese (MI) (IT)**

(74) Representative: **Raimondi, Margherita et al**
**Dott. Ing. Prof. Alfredo Raimondi S.r.l.,**
**Piazzale Cadorna, 15**
**20123 Milano (IT)**

(56) References cited:
**EP-A1- 2 822 193    US-A1- 2008 025 442**

**Description**

The present invention relates to a method and an apparatus for revising estimates of symbols carried by signals which are transmitted with modulation on a single frequency channel of a short-range LOS (Line-of-Sight) radio relay comprising multiple antennas and multiple channel inputs/outputs (MIMO) and are reconstructed upstream of the estimate to be revised.

It is known that in the technical sector of telecommunications there is the need to provide transmission systems with an increasingly greater transmission capacity for the same available bandwidth. These systems are in particular increasingly required for example in an urban environment and over short distances in order to provide users with high speed wireless Internet connections and data services.

In addition, in order to serve the users, a network interconnecting the base stations must also be installed; this network is normally provided by means of radio relay links which are also over a short distance (generally less than 20 km) between two fixed points. These latter sections, which are also referred to as being "short distance" (or "urban") have the characteristic of offering a channel with transmission means which may be regarded as being "time invariable": namely which are such that they may be considered to be uniform and constant over time, since the factors which affect signal propagation (in particular those associated with the multiple paths resulting from air stratification) do not manage to produce variations such as to alter the predefined geometry for radio link propagation. Rain factors are generally regarded as not varying the geometry of the radio link.

In this connection, digital transmission via a radio relay has refined the multilevel modulation technology, increasing the number of symbols of the modulation constellation and resulting in an initial increase in the capacity of the single input/single output (SISO) link per frequency channel.

A known technique for further increasing the information transmitted on such radio relays involves using, for propagation of the signals, electromagnetic waves which can be discriminated from each other by mode and/or by transmission polarization (for example, horizontal/vertical, circular in a clockwise/anti-clockwise direction, or the like) and which allow the same radio channel to be reused for a second transmission, for example using transmitters which transmit isofrequential signals on orthogonal antenna polarizations, which signals are intrinsically such as to allow a certain degree of discrimination for recognition thereof during reception (e.g. cross-polar transmission), making use of the discrimination (XPD) offered by the said antennas.

A further increase in capacity is at present obtained by duplicating the single or double polarization system using a second antenna (with single or double polarization) positioned at a certain distance from the first antenna, thus producing a system with multiple inputs/outputs per frequency channel without intrinsic discrimination of the signals transmitted, these signals instead being subject to total interference; this system is referred to as being of the MIMO (Multiple Input-Multiple Output) type.

The system with two antennas arranged at a distance is used for two main purposes: either to boost a single signal flow and strengthen it by means of transmission and reception using several antennas or, as in this case, to increase the system capacity with the transmission of several signals, even though mutually interfering (MIMO).

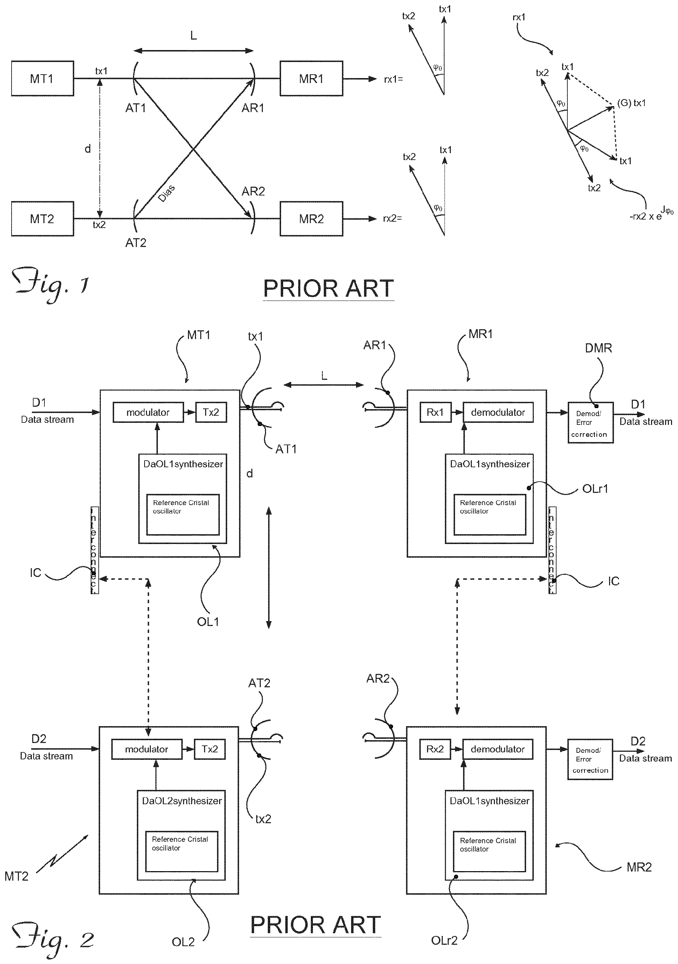

In greater detail, the MIMO technique for providing short distance radio relays with an increased transmission capacity, which exploits the time invariance of the transmission means which characterizes these short sections, uses, for example, a radio link configuration according to the diagram shown in Figure 1 comprising two transmitting antennas AT1 and AT2 which are positioned at a distance "d" from each other and which transmit with the same polarization (copolar transmission) a respective signal tx1,tx2 both using the same radio link, on the same carrier frequency (generally within the microwave bands) and towards two receiving antennas, AR1, AR2, situated at a distance L (possibly a few kilometers, but normally less than about 20 km) from the respective transmission antennas AT1,AT2 and at a distance from each other typically, but not necessarily, again equal to "d". In such a case the signals received by the single antennas are defined as being in total interference, namely composite signals which cannot be intrinsically discriminated during reception into the useful component and the interfering component, since they require appropriate recognition and separation techniques. The diagram illustrated shows the antennas spaced in the vertical direction, as often occurs when using the same post or pylon. The system is not limited in terms of the direction of the spacing, be it vertical, horizontal or according to needs.

According to this technique, the signals transmitted tx1,tx2 are generated by a respective, conventional, modulator/transmitter functional block MT1,MT2 which has at its input a respective baseband source digital flow D1,D2.

With this configuration of the radio relay a relative interference between the transmitted signals occurs at the receiving end, such that each of the receiving antennas AR1,AR2 receives an associated signal rx1;rx2 respectively containing:

- the useful signal tx1;tx2 transmitted by the associated antenna At1;AT2 and
- the interfering signal tx2;tx1 transmitted by the other antenna AT2;AT1;

these useful and interfering signals have the same strength (total interference conditions) and a mutual phase-shift $\varphi_0$ which is constant over time and corresponds to the phase-shift ($\varphi_0$) introduced by the difference in length between the useful path (AT1-AR1; AT2-AR2) and the path with an interfering function ("interfering path" AT1-AR2; AT2-AR1) covered by each transmitted signal (tx1;tx2) at the carrier frequency.

This phase-shift is therefore a function of the fixed geometry of the radio relay, in particular the difference in length between the interfering path (AT1-AR2=AT2-AR1) and the useful path (AT1-AR1=AT2-AR2) of each signal transmitted on the radio relay, having as vertices the four antennas AT1,AT2,AR1,AR2 as well as the wavelength $\lambda$ of the carrier.

With this configuration it is possible, owing to the fixed geometry of the section and provided that the relative phase-shift introduced is greater than 10°, or in any case greater than the value accepted as the degradation limit of the useful component of the signal received, to implement methods for cancelling the interfering component of the signal received on each antenna by imparting, depending on the predefined geometry, suitable phase-shifts to the signals (rx1,rx2) received by the different antennas and adding or subtracting suitably the same to/from each other so as to obtain only the useful signals.

A particular example of the transmission/reception techniques described above is known from MI2009A1431 in the name of the same present Applicant which describes a particular application of reuse of the channel by means of so-called "total interference" transmission which uses a particularly advantageous radio relay geometry defined by the relation [(interfering path - useful path) = $\lambda$/4] in order to obtain a method for cancellation of the interfering component which results in optimal amplification (quadrupling) of the energy of the useful signal component against only a twofold increase in the total noise power. For the purposes of the description of the present invention this system configuration for a MIMO radio link is defined as being "optimal".

A first problem associated with this optimal configuration consists in the need to ensure optimum spacing between the antennas, whereby, in order to achieve this, it is required to increase the antenna supporting infrastructures to an extent which normally is not acceptable for system design engineers. From an industrial and commercial point of view it is therefore difficult to be able to satisfy the requirement for an optimal system configuration.

Whilst not abandoning the attempt to make use of the double transmission capacity which is theoretically offered by MIMO configurations, it therefore becomes desirable not to impose conditions requiring infrastructures which are unacceptable for the user such as the mobile telephone provider. The MIMO system configurations different from the theoretical optimal configuration described above are therefore defined here as "suboptimal".

The system thus defined as suboptimal is characterized by a performance which is inferior to that which can be obtained with an optimal system since it results in a loss in terms of the error threshold margin, i.e. incorrect decoding starts earlier when the channel degrades following a disturbance of the propagation. This occurs because cancellation of the interfering signal results in a smaller increase or even no increase in the actual energy of the useful signal.

The loss of error threshold margin results in a reduction in the actual time for which the most effective modulation is maintained, this in turn resulting in a smaller increase in the possible transmission capacity. Depending on the extent to which the increase is less than that obtainable in optimal conditions, it may be determined whether or not it is convenient to invest in the MIMO system structure, which requires double the investment in terms of number of antennas and reception/transmission devices compared to the SISO structure.

EP 2 922 193 discloses a method of demodulating, reconstructing and estimating the symbols of three signals transmitted in total mutual interference on a MIMO radio relay having three transmission/reception antennae, which method uses the peculiar geometry with three antennae of the radio relay to cancel the mutual interference from the three received signals. This method is of very limited applicability and no mention is made of how improve the reliability of the obtained estimates.

US 2008/025442 A1 discloses an interference cancellation receiver using an LLR calculator considering the Euclidian distance in a constellation far all signal combinations of the interference received signals.

The technical problem which is posed, therefore, is that of developing a method and an apparatus which are able to achieve in a particularly simple and low-cost manner an improvement in the reliability of the data transmission on short-range MIMO radio relays on which multiple, isofrequential and co-polar modulated signals are transmitted, allowing, during reception, a reliable separation of the useful components from the interfering components of the signals received by multiple receiving antennas of the said radio relays and a reliable estimate of the modulation symbols carried by the said transmitted signals.

It is required, moreover, that this method and this apparatus should allow a further increase in the transmission capacity of short distance MIMO radio relays comprising two transmitting/receiving antennas per polarization, by introducing improvements which allow an increase in the capacity and/or reliability of the transmission channel, without varying the positioning of the pre-existing antennas.

It is also desirable that such an increase in capacity should not adversely affect to an unacceptable degree the reliability of the link compared to a corresponding SISO link. These results are obtained according to the present invention by a method according to the characteristic features of Claim 1 and by a corresponding apparatus according to the characteristic features of Claim 9.

Further details may be obtained from the following description of non-limiting examples of implementation of the method, the apparatus and the system according to the present invention provided with reference to the accompanying drawings, in which:

Figure 1: shows the diagram of a configuration for a MIMO radio relay with two transmitting/receiving antennas per polarization according to the prior art;

Figure 2: shows a more detailed block diagram of a link realized with the configuration shown in Fig. 1;

Figure 3: shows a more detailed block diagram of the receiver side of the link shown in Fig. 2;

Figure 4: shows a more detailed block diagram of the receiver side of a MIMO link, comprising an apparatus according to the invention;

Figure 5: shows a partial diagram of an example of a revision apparatus according to the present apparatus.

Figure 6: shows an illustration of carriers comprising symbols sliced upstream and associated adjacent symbols, processed by an apparatus according to the invention, with two associated tables explaining the contents of each carrier;

Figure 7: shows an illustration of carriers of signals reconstructed by means of non-linear cancellation, processed by an apparatus according to the invention;

Figure 8: shows a partial diagram of an example of a structure of an apparatus according to the invention, comprising a slicer module, a module for calculating a residual error and selector modules;

Figure 9a: shows a matrix comprising carriers of symbols sliced on the basis of the reconstructed signals of Fig. 7 and the associated slicer residual error modulus for each sliced symbol processed by an apparatus according to the invention;

Figure 9b: shows an overall matrix processed by an apparatus according to the invention for the first of two channels of the link, with carriers of adjacent symbols according to Fig. 5 for reference.

For the sake of easier illustration, examples of embodiment will be described where there is a single transmission polarization, and therefore a single pair of signals tx1,tx2 transmitted from the transmitting antennas AT1,AT2; the transmission power will moreover be assumed to be the same for all the transmitting antennas AT1,AT2, although the invention is not limited in this sense, the method and the apparatus according to the invention being able to be duplicated for further orthogonal transmission polarization and/or for different transmission power levels.

In addition, with regard to the installation of antennas it is known that, in the case of small differences compared to the ideal configuration, there exist techniques for compensating said differences.

With reference to Figs. 1 and 2, which show a first polarization of a total interference MIMO radio link, it can be seen that each transmitting antenna AT1,AT2 transmits a respective signal tx1,tx2 generated by a respective conventional modulator/transmitter unit MT1,MT2 which receives at its input a respective baseband source data flow D1,D2; in the example shown it is assumed, for easier description, that the values assumed by tx1,tx2 in the appropriate symbol times are precisely synchronized with the corresponding information symbols of the source signals D1,D2 and that the transmitted signals tx1,tx2 therefore do not contain additional noise components compared to the source flows D1,D2. As shown in Figure 2, the modulator/transmitter units MT1,MT2 comprise the circuitry for implementing the operations for encoding the digital information and generating the high-frequency signal (microwaves) which is amplified by the transmitter module TX1,TX2 connected to a polarization of the antenna AT1,AT2. Each signal transmitted tx1;tx2 will therefore comprise a sequence of symbols of the modulation constellation used by the respective modulator/transmitter unit MT1,MT2.

Generally, in this context, the transmitter modules TX1,TX2 are located each in an ODU (outdoor unit) located immediately behind the respective transmitting antenna AT1, AT2 in order to avoid waveguide link losses between transmitter and antenna; these ODUs comprise the local oscillators OL1, OL2 which are separate from and independent of each other. The signal tx1 transmitted by the first antenna AT1:

propagates towards the first antenna AR1 along its primary path of length L and is received (Fig. 1) by the first receiving antenna AR1;

- propagates towards the second antenna AR2 along the interfering path AT1-AR2 and is received by the second receiving antenna AR2 with a first relative phase-shift (delay);

Similarly, the signal tx2 transmitted by the second antenna AT2:

- propagates towards the second antenna AR2 along the respective primary path of length L and is received by the second antenna AR2;
- propagates towards the first receiving antenna AR1 along the interfering path AT2-AR1 and is received by the same with a relative phase-shift equal to the first phase-shift.

Said phase-shift between the useful signals and the interfering signals depends on the predefined geometry of the radio link, as summarized above.

In general, the method and the apparatus according to the invention are applicable to telecommunications systems comprising a short-distance MIMO radio link with at least two pairs of transmission/reception antennas AT1-AR1;AT2-AR2 for each transmission polarization, wherein each of said receiving antennas AR1,AR2 is designed to receive a respective high-frequency signal comprising a useful component, corresponding to the signal transmitted by the respective transmitting antenna, and an interfering component, formed by the signal transmitted by the other transmitting antenna.

Downstream of each receiving antenna there is a corresponding reception/demodulation chain MR1,MR2: a receiver/amplifier block RX1,RX2 upstream of a circuit provided with a similar synthesized local oscillator OLr1;OLr2 which adjusts the spectrum of the signal received to frequencies lower than the high transmission frequencies (microwaves). Generally, these components are also contained inside an outdoor unit which in the practical applications comprises both a transmitter/modulator block and a receiver/demodulator block MR1,MR2, the links being usually bidirectional. There is also a low-speed exchange of information (feedback) from the reception site to the transmission site.

Each receiver/demodulator block MR1,MR2 introduces into the respective signal received a noise component n1,n2 including various noise factors, such as thermal noise of the receiver and a phase noise due to the jitter of the local demodulation oscillator OLr1, OLr2.

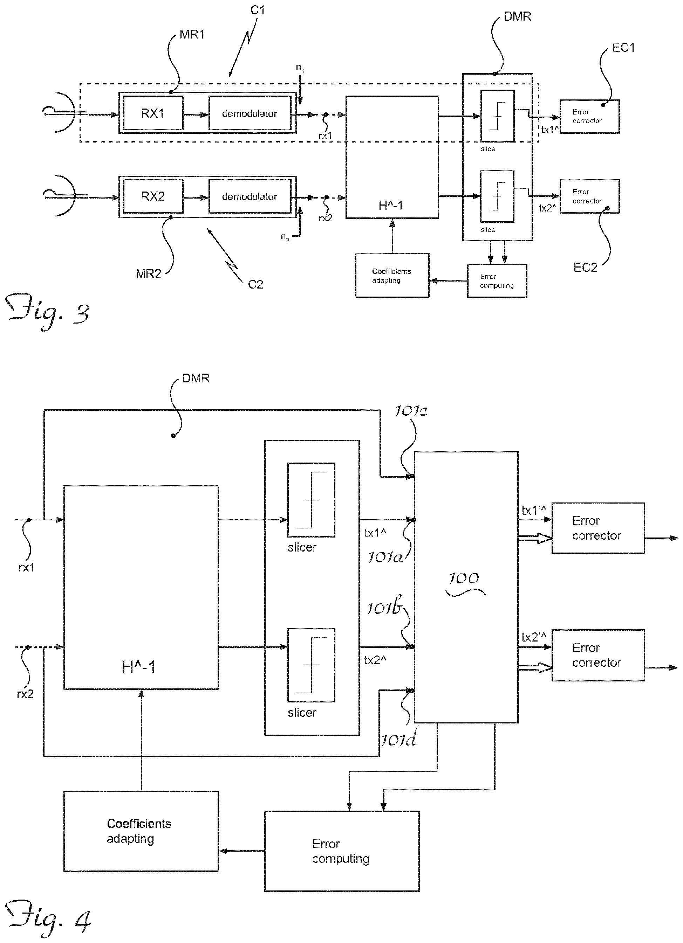

With this configuration, each receiver/demodulator module MR1;MR2 (Fig.3) has at its output a received signal rx1,rx2 which is the sum of:

--) a useful signal tx1;tx2 transmitted by the respective transmitting antenna AT1;AT2;
--) an interfering signal $tx2*exp(j\varphi 0);tx1*exp(j\varphi 0)$ corresponding in the case in question to the signal tx2;tx1 transmitted by the other antenna AT2;AT1 and received with a corresponding phase-shift of cpO relative to said useful signal tx1;tx2 received;
--) the noise component n1;n2 of the respective reception/demodulation module MR1;MR2.

The received signals rx1,rx2 thus formed continue therefore downstream, in the reception processing chain towards a reconstruction/estimation assembly DMR which performs the actual demodulation (Figs. 2 and 3) of the respective signal received, i.e. the reconstruction of the transmitted signal tx2;tx1 by means of cancellation of the interfering component tx2;tx1 of each received signal rx1,rx2 and a subsequent estimate (slice) $tx1^{\wedge},tx2^{\wedge}$ of the constellation symbols transmitted. Downstream of these operations, generally, one or more processors for correcting the reconstruction and estimation errors are present. For the reconstruction by means of cancellation of the interfering signal there is an interconnection IC between the two reception branches c1,c2 which allows the exchange of the respective received signals rx1,rx2 which, suitably rotated by suitable cancellation rotation coefficients, and where necessary amplified, will be added together in a node for reconstruction of each signal transmitted, in order to perform the mutual cancellation of the interfering components present in each received signal rx1,rx2.

In the example of the radio relay link described here it is important to maintain the structure with separated ODUs on the reception side. This architecture satisfies the requirement for initial installation with SISO (Single Input-Single Output) and subsequent possibility for expansion to MIMO. Moreover, when the distance d between the antennas is a few meters (at least 2 m), in order to realize the two ODUs in the form of a single container it would be necessary to provide a very long microwave connection with the antennas, with not insignificant losses.

Finally, for the orthogonal double polarization architecture which is commonly used, a single container would have to be constructed for four receiver/transmitters (H and V) which, although possible, would nevertheless involve a concentration of processing operations and thermal dissipation which would be industrially disadvantageous, since it would also require a particular ODU product structure solely for the MIMO solution instead of a uniform ODU product structure which could be freely used in all cases.

For these main reasons the reception ODUs are preferably separate. This condition highlights an aspect which influences the reconstruction of the signals transmitted by means of mutual cancellation: the local oscillators OLr1,OLr2 of the receivers are realized with a synthesizer which generates a sinusoid which does not have an absolute degree of purity, namely has a certain jitter (deviation) which the reconstruction assembly DMR must attempt to make allowance for by means of suitable algorithms. For some years, pilot symbols have been used for this purpose: namely part of the transmission and processing capacity has been sacrificed in order to insert into the sequence of symbols transmitted a number of symbols which are known beforehand to the receiver and which provide it with a periodic reference for recovery of the phase synchronism, thus making it possible to avoid unification of the two ODUs comprising the respective reception/demodulation blocks MR1,MR2 with common connection thereof to a same local oscillator considered to be inconvenient and a source of problems.

In the case of the MIMO radio link configuration described here, the independence of the local oscillator on the reception side increases the difficulty of the mutual cancellation interference: the reconstruction of each stream of constellation symbols carried by a respective transmitted signal tx1,tx2 is in fact disturbed by the sum of the two jitter values of the local oscillators OLr1,OLr2 of the two receiver/demodulator blocks MR1,MR2.

The present invention is applicable in particular to the radio links operating with MQAM modulation with a high number of levels, i.e. modulation constellation symbols, in particular at least 256 levels. The sensitivity to random rotation noise (jitter noise) constitutes a significant drawback of such modulation.

With reference to Fig. 3, reconstruction of the signals transmitted is performed by a reconstruction block $H^{-1}$ which receives at its input the demodulated received signals rx1,rx2 and comprises an adder node in which linear addition of the demodulated received signals rx1,rx2 is performed, said signals being suitably phase-shifted and/or amplified on the basis of given coefficients using the technique known in the field as "channel matrix H inversion".

These coefficients are generally updated and adapted using a known technique for adaptive updating of the inverse channel matrix $H^{-1}$ coefficients, normally performed making use of the instantaneous residual error present on the linear outputs (reconstructed signals) of the reconstruction block $H^{-1}$.

At the output of the reconstruction block $H^{-1}$ there are the two linearly reconstructed transmitted signals which are input to a respective slicer for the non-linear estimate tx1^,tx2^ of the respective transmitted symbol tx1,tx2.

The output of the reconstruction/estimation assembly DMR is therefore a first vector [tx1^;tx2^] of estimates of the transmitted signals, formed by a respective modulation constellation symbol of the respective transmitted signal tx1,tx2, each estimate being emitted by the slicer of the respective reception and reconstruction branch c1,c2 of the link based on a respective received signal rx1,rx2.

These estimates of the symbols carried by the transmitted signals are generally affected by a certain significant symbol error rate (SER) dependent on the noise components n1,n2 introduced by the receivers/demodulators MR1/MR2 and therefore their thermal noise, by the suboptimal nature of the MIMO system configuration and also by the differential jitter between the two receivers/demodulators MR1,MR2 which influences the reconstructed signal/noise (S/N) ratio.

The error rate of these initial estimates tx1^;tx2^, in the presence of considerable noise, may be very high, in this case and purely by way of example calculatable at an estimated error rate such as to give a BER≥0.05 (in terms of symbol errors affecting the estimate tx1^;tx2^, and for 256 QAM modulation, this corresponding to a symbol error rate SER of more than 40%), if the cancellation/reconstruction is to be performed in a linear manner based on so-called channel H matrix inversion.

As an alternative of this first reconstruction and estimate of the transmitted signals, based on the method of the channel matrix inversion which employs linearly the signals received rx1,rx2 in order to perform mutual cancellation of the respective interfering components, there exists in the prior art an alternative non-linear reconstruction method based on the use of a single received signal and a first estimate of one of the transmitted signals, which is advantageous since only the noise of one receiver is involved.

In this case, however, a problem arises: while, on the one hand, cancellation by means of an estimate of the transmitted signal (which is a whole value, without decimals, therefore hiding reconstruction imprecision) is per se an advantage since there is no (total) addition of the two received signals rx1,rx2 (suitably phase-shifted by the coefficients of the inverse matrix H^-1), and therefore of the two noise values n1,n2 carried by them, but only one signal, resulting in a gain of 3dB in terms of S/N ratio if the estimate is correct; on the other hand, if the estimate is incorrect, the error will affect both the reconstruction and the estimate itself, the slicing of which will be characterized by an incorrect estimate, and the subsequent reconstructions and estimates will also be affected, the cancellation rotation coefficients being updated on the basis of the incorrect estimate.

A technical problem is therefore that of improving the estimate of the transmitted signals, in particular when this estimate is affected by significant noise and therefore a high error level.

Downstream of the reconstruction/estimator assembly DMR there is normally present an error corrector EC1;EC2 (Figure 3) which is able to remedy many slicing errors. However, the final performance of the reception system is synergically improved if the estimates presented to the error corrector are characterized by a low number of errors to be corrected, the correctors by their nature being unable to cope with the correction of prolonged series (bursts) of consecutive errors. It is moreover known that it is not possible to make use of the revisions performed by the error corrector since they are available after many symbol intervals, i.e. with a very long latency, typical of error correctors.

An object of the present invention is to provide an apparatus and a method for the revision of estimates of the symbol carried by the transmitted signals tx1,tx2 able to be implemented downstream of the reconstruction and estimation assembly DMR of the prior art, in order to improve the reconstruction and estimation of the symbols transmitted, hitherto negatively affected by the aforementioned drawbacks.

With reference to Figure 4, a revision apparatus 100 according to the invention is designed to be arranged between the preceding slicers of the reconstruction/estimation assembly DMR and the error correctors EC1,EC2, so as to output a pair of estimates tx1^; tx2'^ of the symbols carried by the transmitted signals tx1,tx2, revised with respect to the preceding initial estimates with an operating speed such that the results of the revision may also be used by other units of the system. Preferably the method/apparatus also outputs information relating to the residual error associated with the slicing performed on the revised estimates, which may be used, if necessary, by a specially designed error corrector. In this way the overall performance features of the system are improved up to the estimates tx1^;tx2^ of the symbol carried by the transmitted signals and the error corrector is enabled in turn to increase its performance.

With reference still to Fig. 4, the revision apparatus 100 according to the invention comprises signal inputs 101a-b for the initial estimates tx1^;tx2^ of the transmitted constellation symbols tx1,tx2 emitted by the preceding slicers of the reconstruction/slicer assembly DMR following the reconstruction process by means of cancellation of an interfering component and subsequent estimate; these initial estimates tx1^;tx2^ are, as mentioned, generally affected by a certain significant error rate which, in the case of a lot of noise, may be very high.

The revision apparatus 100 also has signal inputs 101c-d for the original, received and demodulated, signals emitted by the respective reception/demodulation blocks MR1,MR2 of the respective first and second reception branches c1;c2.

With reference to Figs. 4-10, a revision apparatus 100 according to the invention comprises:

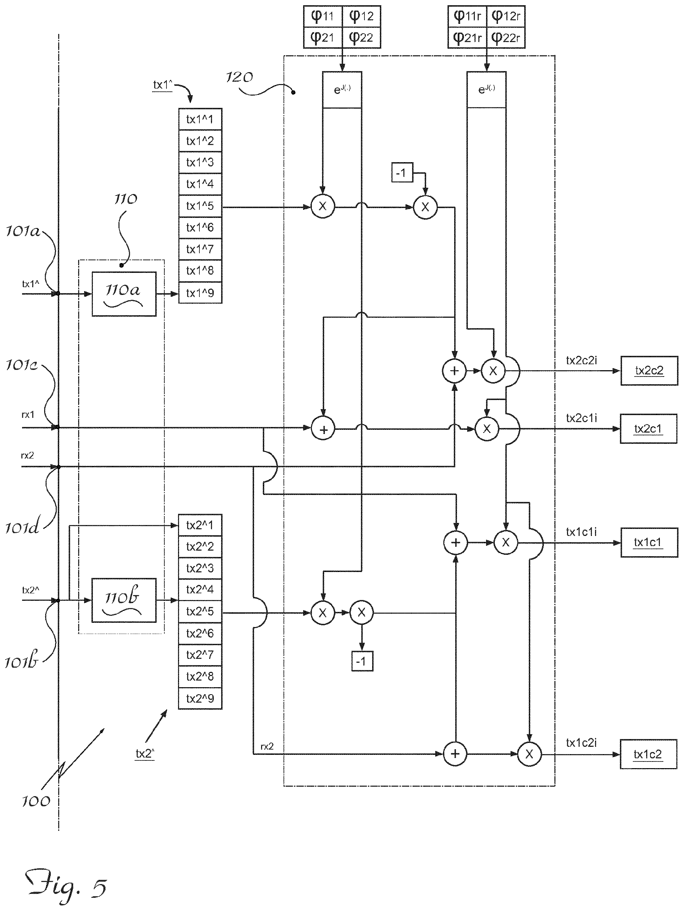

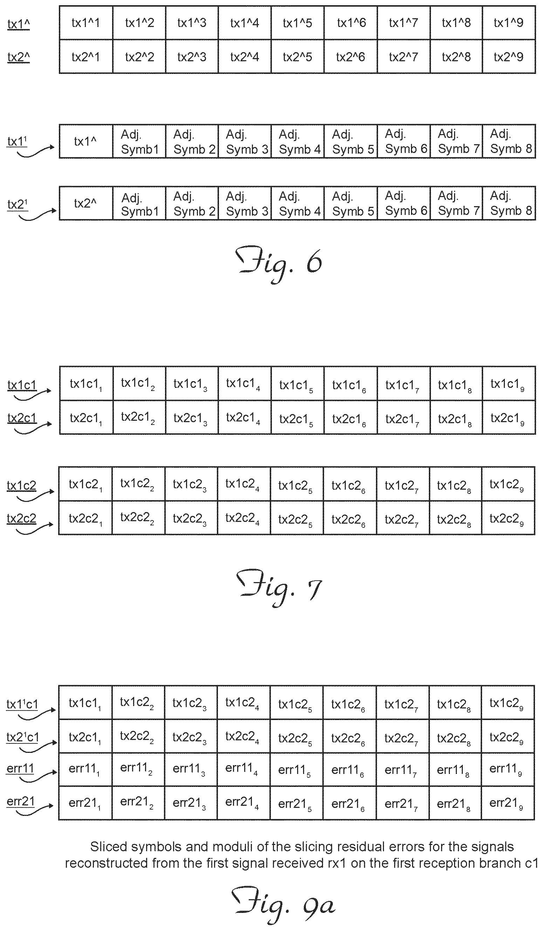

- a module (110) for construction of a vector tx1^;tx2^ of possible estimates of the symbol carried by the transmitted signal tx1;tx2 for each symbol estimate tx1^,tx2^ of the transmitted signal tx1;tx2 received at the input; each vector tx1^;tx2^ comprising the estimated symbol tx1^; tx2^ received at the input and at least the eight symbols adjacent thereto in the modulation constellation (Fig. 6). In the example shown in Fig. 5, the module 110 for construction of possible estimates of the symbol carried by a transmitted signal is shown in the form of two sub-modules 110a,110b, each able to receive at their input a respective flow of estimates tx1^,tx2^ of the symbol transmitted and to output, for each symbol estimate input, a respective vector tx1^, tx2^ of possible estimates of the symbol carried by the transmitted signal tx1;tx2. Each vector tx1^, tx2^ is preferably saved in a respective register of a memory of the apparatus;

- a memory comprising registers for storing the various elements processed and/or necessary for the processing operations;

- a cancellation node 120 for receiving at its input:

  ▪ each received and demodulated signal rx1,rx2 originating from an associated antenna AR1,AR2 and an associated reception/ demodulation block of a respective reception and reconstruction branch c1,c2;
  ▪ each vector tx1^; tx2^ of possible estimates of the symbol carried by one of the transmitted signals tx1;tx2 containing a respective initial estimate tx1^;tx2^ of the symbol transmitted and the respective possible adjacent symbols in the modulation constellation;
  ▪ a first series of rotation coefficients $\varphi 11$, $\varphi 12$, $\varphi 21$, $\varphi 22$ for cancellation;
  ▪ a second series of rotation coefficients $\varphi 11_r$, $\varphi 12_r$, $\varphi 21_r$, $\varphi 22_r$;
  and for outputting (Fig. 7), for each signal received rx1,rx2 (or for each reception branch c1,c2):

    -- a respective first vector tx1c1; tx1c2 each containing a set of reconstruction signals of the first transmitted signal tx1, reconstructed by means of non-linear cancellation performed by cancelling from the respective signal received rx1,rx2, which comprises the two mutually interfering transmitted signals tx1,tx2, an interfering component (tx2), by means of a respective symbol of the vector tx2^ of possible symbols carried by the second transmitted signal tx2 (e.g. tx1c1 is an attempt at reconstruction of the signal tx1 transmitted by the first transmitting antenna AT1, performed by cancelling from the signal rx1 received on the receiving branch c1 a possible symbol carried by the interfering signal tx2 transmitted by the second antenna AT2). Preferably, when performing non-linear cancellation from the first signal received rx1, each symbol tx2^i of the carrier of possible estimates of the symbol carried by the second transmitted signal is suitably rotated with a same first rotation coefficient $\varphi 11$ for the cancellation of the first series of coefficients, and the result of each cancellation thus obtained is also suitably rotated by a same first $\varphi 11_r$ of said coefficients of the second series of coefficients; in a similar manner, preferably, when performing non-linear cancellation of the second signal received rx2, each symbol tx2^i of the carrier of possible estimates of the symbol carried by the second signal transmitted is suitably rotated with a same third rotation coefficient $\varphi 12$ of the first series of coefficients for cancellation, and the result of each cancellation thus obtained is also suitably rotated by a same third coefficient $\varphi 12_r$ of said coefficients of the second series of coefficients;

    -- and a respective second vector tx2c1, tx2c2 each containing a set of reconstruction signals of the second transmitted signal tx2, each reconstructed by means of non-linear cancellation performed by cancelling from the respective signal received rx1,rx2 an interfering component (tx1), by means of a respective symbol of the vector tx1^ of possible estimates of the symbol carried by the first signal transmitted tx1. Preferably, when performing each non-linear cancellation from the first signal received rx1, each symbol of the vector tx1^ of possible estimates of the symbol carried by the first signal transmitted is suitably rotated with a same second rotation coefficient $\varphi 21$ for cancellation of the first series of coefficients, and the result of each cancellation is also suitably rotated by a same second coefficient $\varphi 21_r$ of the second series of coefficients;

similarly, preferably, when performing each non-linear cancellation of the second signal received rx2, each symbol of the vector tx1^ of possible estimates of the symbol carried by the first signal transmitted is suitably rotated with a same fourth rotation coefficient $\varphi 22$ for cancellation of the first series of coefficients, and the result of each cancellation is also suitably rotated by a same fourth coefficient $\varphi 22_r$ of the second series of coefficients;

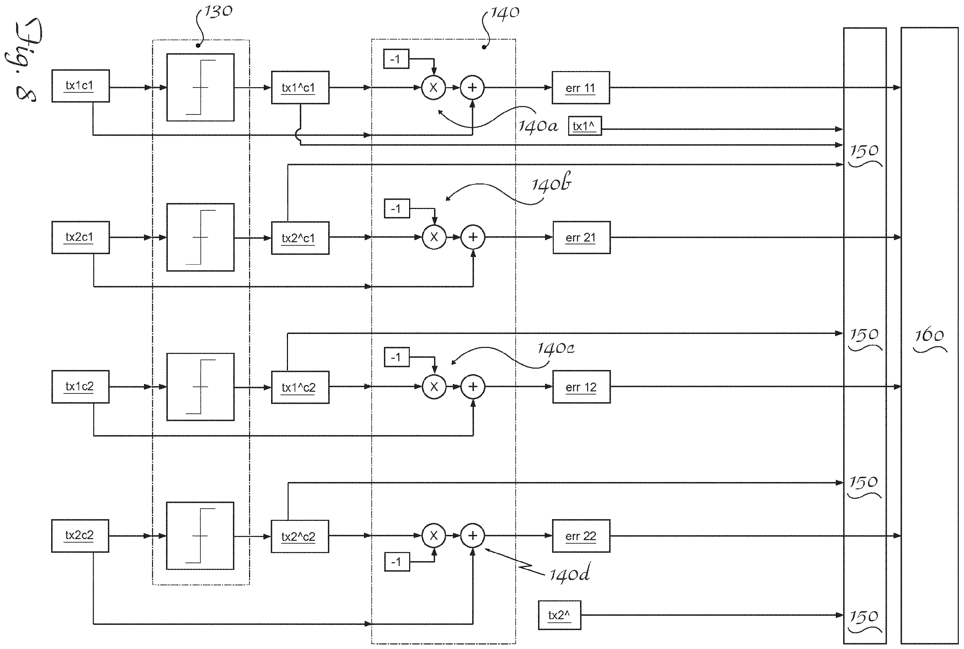

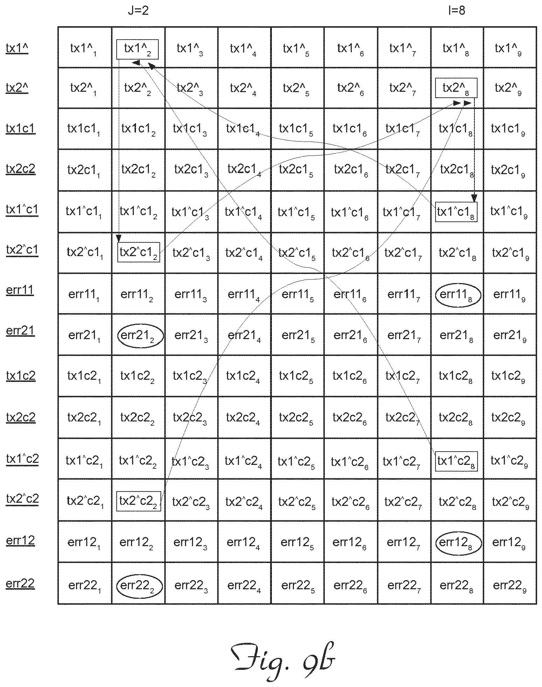

- a slicer module 130 (Fig. 8) designed to receive at its input each of said vectors tx1c1, tx2c1; tx1c2, tx2c2 of reconstructed signals, perform the estimation tx1^cli, tx2^cli; tx1^c2i, tx2^c2i of the respective constellation symbol associated with each i-th reconstructed signal of each vector, and emit a corresponding number of vectors tx1^c1, tx2^c1, tx1^c2, tx2^c2, comprising said estimates of the symbol carried by the first or second transmitted signal tx1;tx2 (Figs. 6,9), each processed by means of slicing on the basis of a respective reconstructed signal of the vectors tx1c1, tx2c1; tx1c2, tx2c2 of reconstruction signals of the first or second transmitted signal;

- a module 140 (Fig. 8) for calculating a slicer residual error associated with each of said transmitted signal symbol estimates calculated by the slicer module 130; the calculation module 140 receives at its input said vectors tx1^c1, tx2^c1, tx1^c2, tx2^c2 containing the sliced estimates and also the respective reconstructed signal vectors tx1c1, tx2c1; tx1c2, tx2c2, and calculates the modulus of the slicer error for each reconstructed signal and corresponding sliced estimate, for example by means of a respective subtractor 140a,b,c,d. The slicer residual errors thus calculated are saved in a respective vector err11, err21, err12, err22 associated with each vector of estimates tx1^c1, tx2^c1, tx1^c2, tx2^c2 input to the module 140 (Figs. 8, 9);

- a first selector module 150 for receiving at its input:

  ■ Said vectors tx^1; tx^2 of possible estimates of the symbol carried by a respective transmitted signal tx1;tx2;
  ■ Said vectors of tx1c1, tx1c2 of reconstruction signals of the first transmitted signal tx1 and said vectors tx2c1, tx2c2 of reconstruction signals of the second transmitted signal tx2;
  ■ Said vectors tx1^c1, tx2^c1, tx1^c2, tx2^c2, comprising the transmitted signal symbol estimates processed on the basis of the vectors tx1c1, tx2c1; tx1c2, tx2c2 of reconstructed signals;
  and for selecting, by means of a combined check on said vectors, at least one pair comprising a j-th possible symbol tx1^j carried by the first transmitted signal tx1 and an i-th possible symbol tx2^i carried by the second transmitted signal tx2 such that the following condition is applicable:

$$tx1\hat{}c1_i = tx1\hat{}c2_{i\,=}\,tx1\hat{}_j \quad \text{and} \quad tx2\hat{}c1_j = tx2\hat{}c2_j = tx2\hat{}_i$$

where i and j indicate a respective position or column of each vector.

The first selector module 150 therefore selects at least one pair tx1^j;tx2^i of possible constellation symbols, one being carried by the first transmitted signal and one being carried by the second transmitted signal tx1;tx2, respectively, each selected pair comprising:

○ A j-th symbol (tx1^j) of the vector of possible estimates of the symbol carried by the first transmitted signal tx1), which corresponds:

  ■ both to the symbol tx1^c1i estimated on the basis of the reconstruction signal tx1^cli of the first transmitted signal, reconstructed by subtracting from the first signal received rx1 an i-th symbol tx2^i of the set tx2^ of possible symbols of the second transmitted signal,
  ■ and to the symbol tx1^cli estimated on the basis of the reconstruction signal tx1c2i of the first transmitted signal tx1, reconstructed by subtracting from the second signal received rx2 an i-th symbol tx2^i of the set tx2^ of possible symbols carried by the second transmitted signal tx2; and

○ An i-th symbol tx2^$_i$ of the vector tx2^ of possible estimates of the symbol carried by the second transmitted signal tx2, which corresponds:

  ■ both to the symbol tx2^cl$_j$ estimated on the basis of the reconstruction signal tx2c1$_j$ of the second transmitted signal tx2, reconstructed by subtracting from the first signal received rx1 that j-th symbol tx1^$_j$ of the set tx1^ of possible symbols carried by the first transmitted signal tx1;
  ■ and to the symbol tx2^c2$_j$ estimated on the basis of the reconstruction signal tx2c2$_j$ of the second transmitted signal tx2, reconstructed by subtracting from the second signal received rx2 that same j-th symbol tx1^j of the set of possible symbols carried by the first transmitted signal tx1.

The selector 150 checks in this way that the non-linear cancellation carried out on a first received signal rx1, for example performed by means of subtraction (with suitable rotation coefficients) of a possible estimate $tx1^{\wedge}_i$ of the symbol carried by the first transmitted signal, results in an estimate tx2^cli of the symbol carried by the second transmitted signal which, if used for interference cancellation on the same received signal rx1, results in an estimate of the symbol carried by the first signal transmitted tx1 which corresponds to the symbol of the possible estimate $tx1^{\wedge}i$ used for first cancellation; the selector then cross-checks that also the non-linear cancellation on the second signal received rx2 by means of this possible symbol estimate $tx1^{\wedge}i$ of the first transmitted signal tx1 correspondingly results in the symbol tx2^c2i = tx2^cli = tx2^j used for the preceding cancellation. Finally, it is checked that the symbol tx2^j applied onto the second received signal rx2 results in the same symbol estimate $tx1^{\wedge}i$ of the first transmitted signal tx1 used for the cross-check. Upon confirmation, the pair $tx1^{\wedge}j$, $tx2^{\wedge}i$ is selected as a possible revised pair of estimates of the symbols carried by the transmitted signals.

With low noise disturbance, it normally happens that the pair of estimates tx1^, tx2^ provided by the first linear cancellation level results in a single pair of possible estimates $tx1^{\wedge}i$, $tx2^{\wedge}j$ selected by the selector module 150, namely that the revision by the first selector confirms the estimate of the symbol carried by the first/second transmitted signal, performed by the reconstruction and estimation assembly DMR.

In the case of a high noise level, it happens instead that the selector 150 selects more than one pair of possible estimates of the symbol transmitted by each signal, which verify the selection condition of the first selector module.

According to a preferred embodiment, the apparatus 100 comprises a second selector module 160 able to select a pair of possible estimates $tx1^{\wedge}j;tx2^{\wedge}i$ of the symbol transmitted by the first and second transmitted signal tx1,tx2, out of the at least one pair(s) selected by the first selector module, which is characterized by the minimum sum of the residual quadratic errors calculated for the symbol estimates tx1^c1i;tx1^c2i, tx2^c1j;tx2^c2j processed and for the respective reconstructed signals tx1c1i;tx1c2i, tx2c1j;tx2c2j, the processed estimates corresponding to one $tx1^{\wedge}j$ or the other $tx2^{\wedge}i$ symbol estimate of the selected pair of estimates which have checked the selection condition of the selected pair being examined during the first selection step.

- An example of a second selector module 160 is designed to:

  ■ receive at its input:

  -- said pairs of possible estimates $tx1^{\wedge}j;tx2^{\wedge}i$ of the symbol transmitted by the first and second transmitted signal tx1,tx2 selected by the first selector module 150 as well as:
  -- respective slicer residual error values $err11_i;err12_i$ associated with the respective i-th estimates tx1^c1i;tx1^c2i of the symbol carried by the first transmitted signal tx1, which have been emitted by the slicer module 130 and to which the symbol estimate $tx1^{\wedge}j$ of the selected pair corresponds and on which the first cross-check of the first selection step was carried out, and
  -- respective slicer residual error values err21j;err22j associated with the respective j-th estimates tx2^c1j;tx2^c2j of the symbol carried by the second transmitted signal tx2, which have been emitted by the slicer module 130 and to which the symbol estimate $tx2^{\wedge}i$ of the selected pair corresponds and on which the cross-check of the first selection step was carried out;

  ■ calculate a sum met1;met2 of the slicer residual quadratic errors associated with the symbol estimates processed to which one of the two symbol estimates of the selected pair corresponds, for each of said pairs of estimates selected during the first selection step, for example by means of the operation:

$$\mathrm{met1(tx1j;tx2i)} = \mathrm{met2(tx1j;tx2i)} = (\mathrm{err11}_i^2 + \mathrm{err12}_i^2) = (\mathrm{err21j}^2 + \mathrm{err22j}^2);$$

  ■ select a pair of possible estimates $tx1^{\wedge}j;tx2^{\wedge}i$ emitted by the first selector stage characterized by the minimum value of said previously calculated sum met1,met2 of the slicer quadratic errors;
  ■ emit a pair of revised estimates tx1'^,tx2'^ of the symbol carried by each transmitted signal tx1,tx2, formed by the pair $tx1^{\wedge}j;tx2^{\wedge}i$ of possible estimates with minimum overall quadratic error value, selected in the preceding step;
  ■ optionally: emit also the corresponding value met1=met2 of the calculated sum of the residual quadratic errors on both the reception/reconstruction branches c1;c2 for one of the two estimates $tx1^{\wedge}j;tx2i$ of the selected pair:

$$\mathrm{met1{=}met2} = (\mathrm{err11}_i^2 + \mathrm{err12}_i^2) = (\mathrm{err21}_i^2 + \mathrm{err22}_i^2).$$

This second selection step advantageously makes use of the fact that the residual error err11, present in the reconstruction of one of the transmitted signals tx1 carried out on the first signal received, represents the instantaneous thermal noise of the receiver of the first reception branch c1 upon reception of the signal carried by the transmitted signal; in the same way, the residual error err12 present in the reconstruction of that same transmitted signal tx1 performed on the other (second) received signal rx2 represents the instantaneous thermal noise of the receiver of the other (second) reception branch c2. By calculating the sum of the residual errors committed in the reconstruction of one of the two signals transmitted on both reception branches on information of the overall error on the two reception branches associated with the pair of selected symbol estimates is obtained; for pairs of symbols estimates which satisfy the first selection condition, it is equally well possible to calculate this overall error on either estimate since the two sums will be the same by virtue of the selection condition of the first selection stage.

Since in the field of digital processing of signals the circuits and calculations necessary for realizing the functions specified in this apparatus are known, only the basic diagram showing an example of the functional blocks necessary for performing the operations described is shown.

Operation of the apparatus 100 and an example of a method according to the invention with the configuration illustrated will now be described with reference to the figures, said method comprising the following steps:

1) For each estimate tx1^,tx2^ of the symbol of the transmitted signal tx1;tx2, emitted by the reconstruction/estimation assembly DMR (and therefore for each transmitted signal tx1;tx2 to be reconstructed), a respective extended set $\underline{tx1^{\wedge}}$, $\underline{tx2^{\wedge}}$ of possible estimates of the symbol carried by the respective transmitted signal is constructed 110, containing the transmitted symbol estimate tx1^;tx2^ received at the input of the apparatus 100 and the constellation symbols immediately adjacent to the estimated symbol tx1^;tx2^.

Overall, each extended set $\underline{tx1^{\wedge}}$, $\underline{tx2^{\wedge}}$ of adjacent symbols constructed therefore comprises at least nine possible estimates $tx1^{\wedge}_i, tx2^{\wedge}_i$ of the constellation symbol carried by the respective transmitted signal tx1,tx2, including the initial estimate tx1^;tx2^ received at the input of the apparatus 100.

Two vectors $\underline{tx1^{\wedge}}$, $\underline{tx2^{\wedge}}$ of possible estimates of the symbol carried by the transmitted signal are thus obtained, one being associated with the first transmitted signal tx1 and one being associated with the second transmitted signal tx2.

Preferably, if the estimated symbol of one of the said initial estimates tx1^;tx2^ is situated on the periphery of the modulation constellation (e.g. -11+15i for a 256 QAM), a suitable value outside the constellation (e.g. -11+17i) is introduced as an adjacent symbol in the extended set of adjacent symbols, said value not being associated with any symbol of the constellation used, assuming a predefined grid distance (or distance between two adjacent symbols in the constellation), for example = 2.

Table 1 - Structure of vector $\underline{tx1^{\wedge}}$ adjacent symbols for estimate tx1^

| tx1^ | Adj. Symb f1 | Adj. Symb f2 | Adj. Symb f3 | Adj. Symb f4 | Adj. Symb f5 | Adj. Symb f6 | Adj. Symb f7 | Adj. Symb f8 |
|---|---|---|---|---|---|---|---|---|

Table 2 - Structure of carrier $\underline{tx2^{\wedge}}$ adjacent symbols for estimate tx2^

| tx2^ | Adj. Symb f1 | Adj. Symb f2 | Adj. Symb f3 | Adj. Symb f4 | Adj. Symb f5 | Adj. Symb f6 | Adj. Symb f7 | Adj. Symb f8 |
|---|---|---|---|---|---|---|---|---|

For the purposes of description of the invention, below the elements of each extended set of possible estimates of the symbol carried by a respective transmitted signal tx1;tx2 will be identified as elements $tx1^{\wedge}_i$ and $tx2^{\wedge}_i$ of a respective vector $\underline{tx1^{\wedge}}$, $\underline{tx2^{\wedge}}$ associated with a respective initial estimate tx1^,tx2^, where i indicates the i-th element (in the example the i-the column) of the carrier, as illustrated in Table 3.

Table 3: Synthetic notation for the carriers $\underline{tx1^{\wedge}}$, $\underline{tx2^{\wedge}}$ of possible estimates of the symbol carried by the transmitted signal tx1,tx2

| $tx1^{\wedge}_1$ | $tx1^{\wedge}_2$ | $tx1^{\wedge}_3$ | $tx1^{\wedge}_4$ | $tx1^{\wedge}_5$ | $tx1^{\wedge}_6$ | $tx1^{\wedge}_7$ | $tx1^{\wedge}_8$ | $tx1^{\wedge}_9$ |
|---|---|---|---|---|---|---|---|---|
| $tx2^{\wedge}_1$ | $tx2^{\wedge}_2$ | $tx2^{\wedge}_3$ | $tx2^{\wedge}_4$ | $tx2^{\wedge}_5$ | $tx2^{\wedge}_6$ | $tx2^{\wedge}_7$ | $tx2^{\wedge}_8$ | $tx2^{\wedge}_9$ |

2) For each reception branch c1,c2 associated with a respective received signal rx1,rx2 a calculation is carried out for the elements of the respective vectors $\underline{tx1c1}$, $\underline{tx2c1}$; $\underline{tx1c2}$, $\underline{tx2c2}$ of reconstruction signals of the first and second transmitted signal, each reconstructed by means of non-linear cancellation of a respective interfering component, performed by subtracting from the respective signal rx1,rx2 received on the reception branch c1,c2 a respective element of a vector tx1^,tx2^ of possible estimates of the symbol carried by a transmitted signal tx2;tx1, using the following preferred formulae:

$$tx1c1_i = [rx1 - tx2^\wedge_i *exp(j*\varphi11)]* exp(j*\varphi11_r)$$

$$tx2c1_i = [rx1 - tx1^\wedge_i *exp(j*\varphi21)]* exp(j*\varphi21_r)$$

$$tx1c2_i = [rx2 - tx2^\wedge_i *exp(j*\varphi12)]* exp(j*\varphi12_r)$$

$$tx2c2_i = [rx2 - tx1^\wedge_i *exp(j*\varphi22)]* exp(j*\varphi22_r)$$

as for example in the cancellation node 120 which receives at its input each demodulated received signal rx1,rx2, each vector tx^1; tx^2 of possible estimates of the symbol carried by a transmitted signal, as well as a first group of rotation coefficients $\varphi11$, $\varphi12$, $\varphi21$, $\varphi22$ for cancellation and a second group $\varphi11_r$,$\varphi12_r$,$\varphi21_r$,$\varphi22_r$ of rotation coefficients. Preferred methods of calculating and/or updating the rotation coefficients will be described in greater detail below.

Table 4: Synthetic notation for vectors tx1c1, tx2c1 of signals reconstructed from the signal rx1 received on the first reception branch c1

| $tx1c1_1$ | $tx1c1_2$ | $tx1c1_3$ | $tx1c1_4$ | $tx1c1_5$ | $tx1c1_6$ | $tx1c1_7$ | $tx1c1_8$ | $tx1c1_9$ |
|---|---|---|---|---|---|---|---|---|
| $tx2c1_1$ | $tx2c1_2$ | $tx2c1_3$ | $tx2c1_4$ | $tx2c1_5$ | $tx2c1_6$ | $tx2c1_7$ | $tx2c1_8$ | $tx2c1_9$ |

Table 5: Synthetic notation for vectors tx1c2, tx2c2 of signals reconstructed from the signal rx2 received on the second reception branch c2

| $tx1c2_1$ | $tx1c2_2$ | $tx1c2_3$ | $tx1c2_4$ | $tx1c2_5$ | $tx1c2_6$ | $tx1c2_7$ | $tx1c2_8$ | $tx1c2_9$ |
|---|---|---|---|---|---|---|---|---|
| $tx2c2_1$ | $tx2c2_2$ | $tx2c2_3$ | $tx2c2_4$ | $tx2c2_5$ | $tx2c2_6$ | $tx2c2_7$ | $tx2c2_8$ | $tx2c2_9$ |

3) Calculation, by means of a respective slicer, of the estimates tx1^c1i; tx2^c1i; tx1^c2i; tx2^c2i of the symbol carried by the transmitted signal, associated with each reconstructed signal of the reconstructed signal vectors tx1c1, tx2c1; tx1c2, tx2c2 :

$$tx1^\wedge c1_i = slice(tx1c1_i) ;$$

$$tx2^\wedge c1_i = slice(tx2c1_i) ;$$

$$tx1^\wedge c2_i = slice(tx1c2_i) ;$$

$$tx2^\wedge c2_i = slice(tx2c2_i) ;$$

and, preferably, of the modulus of the residual error associated with each estimate:

$$err11_i \quad = \; | \; tx1c1_i - tx1^\wedge c1_i \; | \; ;$$

$$err21_i \quad = \; | \; tx2c1_i - tx2^\wedge c1_i \; | \; ;$$

$$err12_i = |\, tx1c2_i - tx1{\char`\^}c2_i\,|\, ;$$

$$err22_i = |\, tx2c2_i - tx2{\char`\^}c2_i\,|\, ;$$

for example in the respective modules 130,140 of the exemplary apparatus 100 described above, providing at the output respective vectors of the estimates of the transmitted signal tx1^c1, tx2^c1, tx1^c2, tx2^c2 and of moduli of the residual error err11, err21, err12, err22 associated with them.

4) A first selection step for defining at least one pair of estimates $tx1{\char`\^}j;tx2{\char`\^}i$ of the symbol transmitted by the first and the second transmitted signals tx1;tx2, for which the following conditions are verified:

- the i-th estimate $tx1{\char`\^}cl_i$ of the symbol carried by the first transmitted signal, sliced on the basis of the i-th reconstructed signal txlcli of a first branch c1, obtained by means of non-linear cancellation subtracting an i-th element $tx2{\char`\^}_i$ of the vector of possible estimates of the symbol carried by the second transmitted signal tx2, from the first signal rx1 received on said first branch c1, is equal to (i.e. is the same symbol as) an j-th element $tx1{\char`\^}j$ of the vector $tx1{\char`\^}$ of possible estimates of the symbol carried by the first transmitted signal tx1:

$$tx1{\char`\^}c1i = tx1{\char`\^}j\ ;$$

and

- the i-th estimate $tx1{\char`\^}c2i$ of the symbol carried by the first transmitted signal, sliced on the basis of the i-th reconstructed signal tx1c2i, a reconstruction of the first transmitted signal tx1 obtained by means of non-linear cancellation subtracting from the second signal rx2 received on said second branch c2 the same i-th element $tx2{\char`\^}i$ of the vector tx2^ of possible estimates of the symbol carried by the second transmitted signal tx2, is equal to the said j-th element $tx1{\char`\^}j$ of the vector of possible estimates of the symbol carried by the first transmitted signal tx1:

$$tx1{\char`\^}c2\ i = tx1{\char`\^}j\ ;$$

and

- the j-th symbol estimate tx2^c1j, sliced on the basis of the j-th reconstructed signal tx2c1j, a reconstruction of the second transmitted signal tx2 obtained by means of non-linear cancellation subtracting from the first signal rx1 received the j-th element $tx1{\char`\^}j$ of the vector $tx1{\char`\^}$ of possible estimates of the symbol carried by the first transmitted signal tx1, is equal to the said i-th element $tx2{\char`\^}i$ of the vector $tx2{\char`\^}$ of possible estimates of the symbol transmitted by the second transmitted signal tx2:

$$tx2{\char`\^}c1_j = tx2{\char`\^}_i\ ;$$

and

- the j-th symbol estimate $tx2{\char`\^}c2_j$, associated with the j-th reconstructed signal tx2c2j, a reconstruction of the second transmitted signal tx2 obtained by means of non-linear cancellation subtracting from the second signal rx1 received the said j-th element $tx1{\char`\^}j$ of the vector $tx1{\char`\^}$ of possible estimates of the symbol carried by the first transmitted signal tx1, is equal to the said i-th element of the vector $tx2{\char`\^}$ of possible estimates of the symbol transmitted by the second transmitted signal tx2:

$$tx2{\char`\^}c2_j = tx2{\char`\^}_i$$

Using synthetic notation, relating for example to an exemplary matrix shown in Fig, 9b, generated by an apparatus of the invention and comprising the carriers described above, the selection condition may be expressed thus:

$$tx1{\char`\^}c1i = tx1{\char`\^}j = tx1{\char`\^}c2i$$

&

$$tx2\textasciicircum c1j \; = tx2\textasciicircum i \; = tx2\textasciicircum c2j$$

wherein i and j indicate respective columns of the said matrix, in the example shown in Fig, 9b i being equal to 8 and j equal to 2; the arrows in Fig. 9b indicate instead the various control steps which perform the combined check of the conditions of the first selection step.

In this way the method selects, if present, at least one pair of revised estimates tx1^j;tx2^i which pass the combined check whereby a possible estimate tx2^i, used as canceller on both received signals rx1 and rx2 for non-linear cancellation of the interfering signal, leads to the other estimate tx1^j of the pair of revised estimates. This condition selects at least one existing pair of estimates of the transmitted signals, which are probably correct, and excludes other estimates which are probably incorrect, with a good degree of efficiency.

According to a preferred example of embodiment, in this step a selection vector en is generated, wherein $en_k=1$ only if the preceding condition of the first selection step is present, with k which corresponds to the index i of one estimate tx2^i or j of the other estimate tx1^j of the selected pair.

There will therefore be a certain number of columns where $en_k = 1$, with, as required, k=i or k=j for example:

Table 6: Example of a selection vector en

| 0 | 0 | 1 | 0 | 1 | 0 | 0 | 1 | 0 |
|---|---|---|---|---|---|---|---|---|

The description hitherto has been based on a given tx2^i as initial value for controlling the combined check which led to the association with tx1^j. Equally well the basis could be a given tx1^j with the same criterion, resulting in association with the same tx2^i.

5) A second selection step in which:

- for each selected pair indicated by the index i;j of one tx2^i;tx1^j of the symbol estimates of the pair selected in the preceding step, or wherever $en_k=1$ occurs, a calculation is carried out as to the modulus of the sum of the slicer residual quadratic errors on both the reception/reconstruction branches c1,c2 which are associated with the processed symbol estimates to which the other symbol estimate of the selected pair corresponds and which therefore occupy the k-th position in the respective vector of estimates processed on the basis of the reconstructed signals:

$$\text{for } tx2\textasciicircum i, \; k=i \;\; met1= err11_i^2 + err12_i^2 \; ;$$

or

$$\text{for } tx1\textasciicircum j, \; k=j \;\; met2 = err21_j^2 + err22_j^2 \; .$$

For pairs selected by the first selection step, met1 is always equal to met2 and it is therefore possible to calculate equally well the sum of the slicer quadratic errors based on one estimate tx2^i or the other estimate tx1^j of the pair selected.

- A pair of estimates with the minimum modulus of the overall residual quadratic error sum met1=met2 calculated in the preceding step is selected,
- the pair of estimates tx1^j;tx2^i selected as pair of revised estimates tx1'^ ; tx2'^ of the symbol carried by the first and second transmitted signals tx1,tx2 respectively is emitted.

Preferably, the sum met1=met2 of the slicer residual quadratic errors, associated with said pair of selected estimates, is also output:

$$met1 \; = met2 = er11_i^2 + er12_i^2 = err21_j^2 + err22_i^2.$$

If there is no pair of transmitted symbol estimates which satisfies the cross-selection conditions of the first selection step, the same estimates tx1^;tx2^ of the symbol carried by the transmitted signal received at the input and resulting from the reconstruction and estimation procedure DMR are output.

In this case the method has nevertheless performed a revision of the initial estimates, not having found possible estimates which are better according to the selection criteria.

If, downstream of the revision apparatus 100, there is an error corrector designed to be able to accept several alternative slices, it is possible to provide the same also with pairs of estimates similarly extracted from the other columns where $en_k = 1$ also accompanied by the respective sums of the slicer quadratic errors met1;met2 or all the estimates selected during the first selection step.

It is not within the scope of this description to illustrate an error corrector designed to make use of this additional information compared to the simple output of a single pair of estimates of the symbol carried by the respective signal sliced with a soft or hard slicing operation.

The method according to the invention is very advantageous in terms of computational cost; it is in fact rare to have to search in more than three k-th columns for the pair with minimum sum of residual quadratic errors, associated with either estimate, in order to select the pair of revised estimates of the symbol carried by the transmitted signals. It is therefore clear how the method according to the invention is quick and has a low processing cost.

The method is able to provide an exact revision of about 88% of the initial incorrect estimates tx1^, tx2^ which occur in the presence of generic noise sources such as to produce a BER of 5*e-2 for 256-QAM modulation.

According to a further mode of implementation of the method according to the invention it is possible to carry out a selection step by means of formation of lists of pairs of symbols:

- Each symbol tx1^c1i sliced on the basis of the reconstruction signal tx1c1i of the first transmitted signal, reconstructed by subtracting from the first signal received rx1 an i-th symbol tx2^i of the set tx2^ of possible symbols of the second transmitted signal, forms the pair (tx1^c1i,tx2^i) listed in a list L11.
- Each symbol tx2^c1j sliced on the basis of the reconstruction signal tx2c1j of the second transmitted signal, reconstructed by subtracting from the first signal received rx1 that j-th symbol tx1^j of the set tx1^ of possible estimates of the first transmitted signal tx1, forms the pair (tx1^j,tx2^c1j), listed in a list L12.
- Each symbol tx1^c2i sliced on the basis of the reconstruction signal tx1c2i of the first transmitted signal, reconstructed by subtracting from the second signal received rx2 an i-th symbol tx2^i of the set tx2^ of possible symbols of the second transmitted signal, forms the pair (tx1^c1i,tx2^i), listed in a list L21.
- Each symbol tx2^c2j sliced on the basis of the reconstruction signal tx2c2j of the second transmitted signal, reconstructed by subtracting from the second signal received rx2 that j-th symbol txj^i of the set tx1^ of possible estimates of the first transmitted signal tx1, forms the pair (tx1^j,tx2^c1j), listed in a list L22.

During the first selection step at least one pair of possible constellation symbols is selected, one symbol being carried by the first transmitted signal and the other symbol being carried by the second transmitted signal tx1;tx2, respectively, which appear in all the lists L11, L12, L21 and L22 previously formed.

In this case also, the first selector module therefore selects at least one pair tx1^j;tx2^i of possible constellation symbols, one symbol being carried by the first transmitted signal and the other symbol being carried by the second transmitted signal tx1;tx2, respectively, each selected pair comprising:

◦ A j-th symbol tx1^j of the vector of possible estimates of the symbol carried by the first transmitted signal tx1, which corresponds:

▪ both to the symbol tx1^c1i estimated on the basis of the reconstruction signal tx1c1i of the first transmitted signal, reconstructed by subtracting from the first signal received rx1 an i-th symbol tx2^i of the set $\underline{tx2^}$ of possible symbols of the second transmitted signal,
▪ and to the symbol tx1^c2i estimated on the basis of the reconstruction signal tx1c2i of the first transmitted signal tx1, reconstructed by subtracting from the second signal received rx2 that same i-th symbol tx2^i of the set $\underline{tx2^}$ of possible symbols carried by the second transmitted signal tx2; and

◦ An i-th symbol tx2^$_i$ of the vector $\underline{tx2^}$ of possible estimates of the symbol carried by the second transmitted signal tx2, which corresponds:

▪ both to the symbol tx2^c1$_j$ estimated on the basis of the reconstruction signal tx2c1$_j$ of the second transmitted signal tx2, reconstructed by subtracting from the first signal received rx1 that j-th symbol tx1^j of the set $\underline{tx1^}$ of possible symbols carried by the first transmitted signal tx1,
▪ and to the symbol tx2^c2$_j$ estimated on the basis of the reconstruction signal tx2c2$_j$ of the second transmitted signal tx2, reconstructed by subtracting from the second signal received rx2 that same j-th symbol tx1^j of the set of possible symbols carried by the first transmitted signal tx1.

According to a further embodiment, the slicer residual errors associated with each estimate of the transmitted symbol sliced on the basis of a respective reconstructed signal and useful for the second selection step may be calculated based on said reconstructed signal and respective estimate following said first selection step and only for those processed estimates which satisfy the selection condition and which will be examined during the second selection step. In this way the computational time necessary for calculating the slicer residual errors for estimates which will not be used or selected is avoided.

Methods for calculating and/or updating the phase rotation coefficients

For all the embodiments described, preferably, the rotation coefficients for cancellation of the first series of coefficients are in total four in number: $\varphi 11$, $\varphi 12$, $\varphi 21$, $\varphi 22$.
Initially, it is possible to use, for example, the same coefficients which are used by the reconstruction/estimation assembly DMR for rotation of the signals received rx1,rx2, in order to cancel from them the interfering components, and which are calculated on the basis of the inverse channel matrix $H^{-1}$. These values must be preferably corrected by a constant which the person skilled in the art will be able to define.
Thereafter, the coefficients for cancellation are preferably updated by means of a method which comprises the calculation of a correlation such that, for example, the first coefficient $\varphi 11_t$ used for a symbol (tx2^i) received at a symbol instant t+1 is updated, for use at the following symbol time t+2, subtracting from the said coefficient $\varphi 11_t$ the product of the slicer residual error - associated with a reconstructed signal txlcli and respective estimate tx1^c1i processed using the said coefficient $\varphi 11_t$ - multiplied by the symbol estimate tx2^i used for cancellation, both relating to the instant t+1, wherein said estimate tx1^c1i is an estimate corresponding to the symbol estimate tx1^j of the transmitted signal tx1 of the pair selected as pair of revised estimates, and wherein said residual error err11i is multiplied by the other symbol estimate tx2^i of the selected pair. A preferred method known in the branch is the so-called gradient method used, for example, in decision feedback equalizers (DFE). This method of updating the cancellation rotation coefficient $\varphi 11$ is generally used in the present state of the art to update the cancellation rotation coefficients of the inverse channel matrix $H^{-1}$ using the residual errors relating to the estimates tx1^,tx2^ output by the reconstruction/estimation assembly DMR.
According to an example of implementation of this procedure advantageously applied to the method of the invention, considering that the time t+1 at which the interfering transmitted signal tx2 is cancelled on the received signal rx1 by means of a possible estimate tx2^i of the symbol carried by the said interfering transmitted signal tx2, in order to obtain a reconstruction signal tx1c1 of the first transmitted signal tx1:

$$\mathrm{tx1c1i_{t+1}} = [\mathrm{rx1_{t+1}} - \mathrm{tx2^i_{t+1}} * \exp(j*\varphi 11_t)] * \exp(j*\varphi 11r_t),$$

in which $\varphi 11$and $\varphi 11r$ are the respective phase rotation coefficients of the first and second series,
the preferred method will update the cancellation rotation coefficient using the residual error calculated on the basis of the symbol estimate and respective reconstructed signal situated in the k-th position, where k=1 or j, to which the respective symbol estimate of the transmitted signal tx1^j;tx2^i of the pair selected as pair of revised estimates corresponds.
The result is, following an improvement in the final slicing error rate compared to the original slicing error rate output from the unit DMR, a much more reliable calculation of the residual error used for updating the phase rotation coefficients for cancellation. Consequently, the efficiency in the degree of reconstruction of the said coefficients is greatly improved, with a substantial reduction in the risk of interruption of the reconstruction loop.
In this connection the following technical considerations should be noted: the values of the cancellation rotation coefficients calculated in the reconstruction/estimation assembly DMR based on the inverse channel matrix $H^{-1}$ perform tracking of the instantaneous phase difference between the local oscillators of the reception receivers associated with the first and second receiving antennas respectively. In the presence of independent local oscillators this difference consists of a jitter noise with double the power compared to the configuration with a single antenna/receiver (SISO). This is one of the possible further degradation factors introduced by the MIMO system architecture adopted.
The method and the apparatus of the invention are therefore able to provide two improvements for counteracting this degradation factor, allowing the choice of architecture which offers system advantages of interest to be maintained (separate reception ODUs and therefore LOs).
A first improvement consists in the possibility of the DMR assembly being able to base the realization of the inverse channel matrix $H^{-1}$ on estimates of the transmitted symbol which are affected by a very much lower slicing error rate; this is possible owing to the revision method of the invention which allows the estimates emitted by the DMR assembly to be revised in a suitably rapid manner.

In fact, if the estimates are subject to fewer errors, the risks of an interruption of the carrier reconstruction loops are lower. The method according to the invention may therefore advantageously also make available to the first reconstruction level DMR the estimates revised by the method so that the consequent slicing residual errors are more reliable.

A second improvement consists in the fact that the signals reconstructed by means of cancellation according to the invention are reconstructed on the basis of a single signal received which has only a reception jitter noise. Consequently, following the first improvement where, owing to an improved reconstructed cancellation carrier, the present method may be provided at the input with input estimates tx1^, tx2^ which are certainly more reliable, but still dependent on the tracking of a significant amount of jitter noise - still doubled as characteristic of the linear MIMO system - a second improvement of the present method will consist in the updating of the phase rotation coefficients for cancellation.

Said updating, being carried out on the basis of a slicer error calculated from a reconstructed signal, e.g.:

$$tx1c1i = [rx1 - tx2\hat{}i * \exp(j*\varphi11)]* \exp(j*\varphi11r)$$

reconstructed from a single received signal, and therefore comprising a single reception jitter noise component, will be intrinsically less problematic and more precise.

Preferably the phase rotation coefficients $\varphi11r$, $\varphi12r$, $\varphi21r$, $\varphi22r$ of the second series of coefficients are also four in number and are updated by means of a method which comprises the calculation of a correlation such that the coefficient $\varphi r_t$ used for a symbol received at an instant t+1 is updated, for use at the next symbol time t+2, by subtracting from the said coefficient the product of the slicer residual error multiplied by the reconstructed signal, both associated with the respective sliced symbol estimate to which a revised symbol estimate of the pair selected for emission corresponds.

A preferred method known in the sector is that used for decision-directed carrier recovery.

To summarize, expressed in synthetic notation:

$$tx1\hat{}c1i = \text{slice}(tx1c1i) ;$$

$$tx2\hat{}c1_j = \text{slice}(tx2c1j) ;$$

$$tx1\hat{}c2i = \text{slice}(tx1c2i) ;$$

$$tx2\hat{}c2j = \text{slice}(tx2c2j) ;$$

with the method according to the invention the following symbol estimates are selected:

$$tx1\hat{}c1i = tx1\hat{}c2i = tx1\hat{}j$$

and

$$tx2\hat{}c1j = tx2\hat{}c2j = tx2\hat{}i$$

located in the respective columns j and i;
and the respective residual errors which may be used for updating the phase rotation coefficients are calculated:

$$err11i \quad = \quad tx1c1i - tx1\hat{}c1i \quad ;$$

$$err21j \quad = \quad tx2c1j - tx2\hat{}c1j \quad ;$$

$$err12i \quad = \quad tx1c2i - tx1\hat{}c2i \quad ;$$

$$err22j \;=\; tx2c2j - tx2^{\wedge}c2j \;\; ;$$

where, for example, err11 measures the total noise on the reception channel 1 and err12 measures the total error on the channel 2.

With this notation, preferably, each phase rotation coefficient $\varphi 11$, $\varphi 12$, $\varphi 21$, $\varphi 22$ for cancellation, which is stored in a respective memory register, is updated for the operation at the next symbol time t+2 by a respective correlation whereby:

$$\varphi 11_{t+1} = \varphi 11_t - stsz^*[err11i_{t+1} * tx2^{\wedge}i_{t+1}] \;\; \text{(stsz is a gain term)}$$

$$\varphi 12_{t+1} = \varphi 12_t - stsz^*[err12i_{t+1} * tx2^{\wedge}i_{t+1}]$$

$$\varphi 21_{t+1} = \varphi 21_t - stsz^*[err21j_{t+1} * tx1^{\wedge}j_{t+1}]$$

$$\varphi 22_{t+1} = \varphi 22_t - stsz^*[err22j_{t+1} * tx1^{\wedge}j_{t+1}]$$

Similarly, each phase rotation coefficient $\varphi 11r$, $\varphi 12r$, $\varphi 21r$, $\varphi 22r$ of the second series of coefficients is updated for the operation at the next time instant t+2 by a correlation whereby:

$$\varphi 11r_{t+1} = \varphi 11r_t - stsz^*[err11i_{t+1}^{\;*} * tx1c1i_{t+1}]$$

$$\varphi 12r_{t+1} = \varphi 12r_t - stsz^*[err12i_{t+1}^{\;*} * tx1c2i_{t+1}]$$

$$\varphi 21r_{t+1} = \varphi 21r_t - stsz^*[err21j_{t+1}^{\;*} * tx2c1j_{t+1}]$$

$$\varphi 22r_{t+1} = \varphi 22r_t - stsz^*[err22j_{t+1}^{\;*} * tx2c2j_{t+1}] \;.$$

Although the method and the apparatus have been described with reference to a revision of the initial estimates carried out considering extended sets of possible estimates containing only the constellation symbols immediately adjacent to the said initial estimates - a solution which is preferred since the errors which are committed are normally slicing deviations towards the immediately adjacent symbols - the invention is not limited in this respect and it is always possible to implement the revision method considering also further symbols which are not immediately adjacent, by simply expanding the vectors/extended sets of possible estimates of the transmitted signal so that they incorporate also these further elements (therefore creating an extended set of possible estimates of the transmitted symbol, for example the vector tx1^, comprising more than nine elements). The following steps in the method remain unchanged with respect to the preferred example described. The method is likewise applicable also to possible other constellations, also not of the QAM type, in which there are a plurality of adjacent symbols.

It is pointed out, however, that at a high noise level, i.e. with a high BER, the initial estimates tx1^1 and tx2^1 affected by errors with a distance beyond the immediately adjacent symbols occur relatively infrequently. This means that any raising of the processing level of the method according to the invention, designed to consider for revision of the initial estimates also the symbols which are not immediately adjacent to the said initial estimates, increases the computational cost without resulting in a significant improvement of the BER which is mainly determined by symbol errors at the input towards symbols immediately adjacent in the constellation.

It is therefore clear how the method according to the invention does not require an increasing processing capacity when there is an increase in the number of symbols of the modulation constellation, but has a constant processing cost.

It is therefore clear how, with the method and the apparatus according to the invention, it is also possible to obtain a revision of the initial estimates of the transmitted symbol, being moreover synergically characterized by:

- very low intrinsic latency: any latency is due only to technological and constructional factors, unlike algorithms such as error correction and/or iterative algorithms, which are intrinsically characterized by a significant latency;
- it does not require system-related constraints which are costly and therefore are to be avoided, such as sharing of the local oscillator between the receivers; by generally performing the correction of the incorrect slices, it ensures a higher tolerance also in respect of the damage caused by the jitter of the local oscillators which are independent during reception and/or transmission;
- it does not require two signals received with a different S/N value so that it offers a greater degree of versatility compared to algorithms which use the estimates for repeating iteratively the cancellations starting from the best channel (optimal ordering); it is possible to start equally well from a $tx2^i$ or a $tx1^j$ and/or from the first branch c1 or second branch c2,
- provided that the cross-check of the selection condition is satisfied.
- it is effective also with MQAM modulation with a high number of levels, up to and more than 256-QAM, without a significant increase in the processing cost, unlike the algorithms which are effective or can be implemented only at low modulation levels (MMSE, maximum likelihood detector MLD);
- it does not depend on the use of redundancy and/or alignment imposed by the STC (space-time-coding) systems;
- it intrinsically limits the error propagation which characterizes algorithms with successive cancellation based on estimates (SIC), which instead introduce such error propagation (nulling and cancelling algorithms).
- it does not use pilot or preamble symbols, which may thus be left free for other functions; as will become clearer below, pilot symbols may be advantageously employed by the method according to the invention;
- it is not intended only for certain modulation constellations and therefore allows free swapping from one constellation to another, this aspect being particularly relevant in the context of ACM (adaptive coding and modulation) radio relays;
- it is able to operate also with a high bit error rate on the initial estimates (BER of 0.04 and higher before corrector action);
- it performs operations which are typically in parallel instead of sequential, unlike the methods such as sphere algorithms and trees, resulting in faster processing with low latency.

### Variation of embodiments in the presence of pilot symbols

If, in the sequence of symbols carried by one or each transmitted signal tx1,tx2, there are pilot symbols for other purposes, namely pilot symbols which are known beforehand to the receiver and which do not carry significant information data, but are used by the receiver for example for carrier realignment, rephasing or recovery operations, the method may advantageously benefit from their presence in order to obtain a simplification of the first selection step and better certainty of the revision performed. This is particularly relevant if the pilot symbols are in free positions in the two transmission channels, namely they occur in symbol instants which do not coincide.

If, for example, the second symbol tx2 transports a symbol $tx2^\wedge_1$ which is known to the receiver as being a pilot symbol, then the initial estimate $tx2^\wedge_1$ of the symbol carried by the second transmitted signal tx2 is a safe slice. The pair of final revised estimates emitted by the apparatus (method) 100 must therefore comprise the initially estimated pilot symbol $tx2'^\wedge = tx2^\wedge_1$.

Preferably, the first selection step will comprise the selection of one pair (and/or of sole pairs) which comprise(s) the symbol estimate $tx2^i$ corresponding to the pilot symbol and the exclusion of pairs which do not comprise an estimate of the symbol carried by the transmitted signal which corresponds to the pilot symbol.

According to a further preferred aspect, the first selection step may remain unchanged, but during the second selection step the selection will be forced on a pair of estimates selected by the first selection step which comprises an estimate of the transmitted signal corresponding to the pilot symbol which it is known was carried by the said transmitted signal, even if the sum met1=met2 of the respective quadratic errors $err11_1^2 + err12_1^2$ associated with the selected pair should not be the minimum from among those selected by the first selection step.

It is moreover envisaged that the method is applicable also to a telecommunications system which implements a further increase in the capacity of the channel by transmitting in parallel with each signal tx1,tx2 transmitted with a given polarization an isofrequential signal having orthogonal polarization, the two signals being intrinsically able to be discriminated so that they may be separated during reception using common XPD techniques for eliminating the cross-polar interference.

Although described in connection with a number of embodiments and a number of preferred examples of embodiment of the invention, it is understood that the scope of protection of the present patent is determined solely by the claims below.

**Claims**

1. Method for revision of

   - a first initial estimate (tx1^) of a symbol carried by a first signal (tx1) transmitted by a first transmitting antenna (AT1) of a MIMO, LOS (Line-Of-Sight), radio relay link, and
   - a second initial estimate (tx2^) of a symbol carried by a second signal (tx2) transmitted by a second transmitting antenna (AT2) of the MIMO LOS radio relay link,

   the two signals (tx1,tx2) being transmitted in total mutual interference on the MIMO LOS radio relay link,
   the first initial estimate (tx1^) being output by a slicer of a respective first link branch (c1) for reception and reconstruction, following a process for demodulation and reconstruction of the first transmitted signal (tx1) by means of mutual cancellation of a first signal (rx1) received on a first antenna (AR1) of the radio link upstream of the first reception branch (c1) and a second signal (rx2) received by a second receiving antenna (AR2) of the link, wherein the signals received (rx1,rx2) each comprise said first signal (txl) and second signal (tx2) transmitted in total interference,
   the second initial estimate (tx2^) being output by a slicer of a respective second branch (c2) for reception and reconstruction downstream of the second receiving antenna (AR2) of the radio link, following a process for demodulation and reconstruction of the second signal transmitted (tx2), by means of mutual cancellation of the second signal (rx2) received by the second antenna (AR2) and the first received signal (rx1),
   **characterized in that** it comprises the following steps:

   - for each initial estimate (tx1^; tx2^) of the symbol transmitted: formation of an extended set (tx1^; tx2^) of possible symbols carried by the respective transmitted signal (tx1^; tx2^) comprising at least the modulation constellation symbols directly adjacent to the respective initial estimate (tx1^; tx2^) and the initial estimate (tx1^; tx2^) itself;
   - formation of a first set of reconstruction signals (tx1c1$_i$) of the first transmitted signal (tx1), each obtained by subtracting from the first signal received (rx1) a respective i-th element of the extended set of possible symbols carried by the second transmitted signal (tx2);
   - formation of a second set of reconstruction signals (tx1c2$_i$) of the first transmitted signal (tx1), each obtained by subtracting from the second signal received (rx2) a respective i-th element of the extended set of possible symbols carried by the second transmitted signal (tx2);
   - formation of a first set of reconstruction signals (tx2c1$_i$) of the second transmitted signal (tx2), each obtained by subtracting from the first signal received (rx1) a respective i-th element of the extended set of possible symbols carried by the first transmitted signal (tx1);
   - formation of a second set of reconstruction signals (tx2c2$_i$) of the second transmitted signal (tx2), each obtained by subtracting from the second signal received (rx2) a respective i-th element of the extended set of possible symbols carried by the first transmitted signal (tx1);
   - estimation (tx1^c1$_i$; tx2^c1$_i$; tx1^c2$_i$; tx2^c2$_i$) of the constellation symbol associated with each reconstructed signal, by means of decision on the basis of the respective reconstructed signal (tx1c1$_i$; tx2c1$_i$; tx1c2$_i$; tx2c2$_i$);
   - selection of a pair (tx1^j;tx2^i) of possible constellation symbols, one being carried by the first transmitted signal and one being carried by the second transmitted signal (tx1;tx2), respectively, the selected pair (tx1^j; tx2^i) comprising:

     ◦ a j-th symbol (tx1^j) of the extended set (tx1^) of possible estimates of the symbol carried by the first transmitted signal (tx1), which corresponds:

       ▪ both to the symbol (tx1^c1i) sliced on the basis of the reconstruction signal (tx1c1i) of the first transmitted signal, reconstructed by subtracting from the first signal received (rx1) an i-th symbol (tx2^i) of the set (tx2^) of possible symbols carried by the second transmitted signal,
       ▪ and to the symbol (tx1^c2i) sliced on the basis of the reconstruction signal (tx1c2i) of the first transmitted signal (tx1), reconstructed by subtracting from the second signal received (rx2) that same i-th symbol (tx2^i) of the set (tx2^) of possible symbols carried by the second transmitted signal (tx2); and

     ◦ an i-th symbol (tx2^$_i$) of the extended set (tx2^) of possible estimates of the symbol carried by the second transmitted signal (tx2), which corresponds:

       ▪ both to the symbol (tx2^c1$_j$) sliced on the basis of the reconstruction signal (tx2c1$_j$) of the second

transmitted signal, reconstructed by subtracting from the first signal received (rx1) that j-th symbol (tx1^j) of the set (tx1^) of possible symbols carried by the first transmitted signal (tx1),

- and to the symbol (tx2^c2$_j$) sliced on the basis of the reconstruction signal (tx2c2j) of the second transmitted signal (tx2), reconstructed by subtracting from the second signal received (rx2) that same j-th symbol (tx1^j) of the set of possible symbols carried by the first transmitted signal (tx1);

- emission of a pair (tx1^j;tx2^$_i$) of estimates selected as revised estimates (tx1^';tx2^') of the symbol carried respectively by the first and second transmitted signals (tx1;tx2).

2. Method according to Claim 1, wherein each step for formation of a set of reconstruction signals of one of the transmitted signals comprises the rotation of the symbol estimate to be subtracted from the respective signal received (rx1;rx2) by a respective first coefficient ($\varphi_{11}$, $\varphi_{12}$, $\varphi_{21}$, $\varphi_{22}$) of rotation for the cancellation, and the rotation of the result of the subtraction by a respective second coefficient ($\varphi11_r$, $\varphi_{12r}$, $\varphi_{21r}$, $\varphi_{22r}$) of rotation.

3. Method according to any one of the preceding claims, wherein if one of the two signals transmitted (tx1;tx2) comprises pilot symbols in its sequence of carried symbols, at the symbol instant of a received pilot symbol, the pair (tx1^j; tx2^i) selected for emission comprises said pilot symbol as a revised estimate (tx1^'; tx2^') of the symbol carried by the respective transmitted signal.

4. Method according to any one of the preceding claims, wherein the pair of estimates (tx1^j; tx2^i) selected for emission is that with the minimum value of the sum (met1; met2) of the slicer residual quadratic errors associated with:

- the estimates (tx1^c1$_i$,tx1^c2$_i$) of the symbol carried by the first transmitted signal (tx1), sliced on the basis of the respective reconstructed signals (tx1c1$_i$,tx1c2$_i$), to which the estimate (tx1^j) of the symbol carried by the first transmitted signal (txl) of the selected pair corresponds, or
- the estimates (tx2^clj; tx2^c2$_j$) of the symbol carried by the second transmitted signal (tx2), sliced on the basis of respective reconstructed signals (tx2c1j; tx2c2$_j$), to which the estimate (tx2^i) of the symbol carried by the second transmitted signal (tx2) of the selected pair corresponds,

the selection step comprising the calculation of said residual error for each estimate performed corresponding to a symbol estimate of a selected pair and the calculation of said sum of the residual quadratic errors for each selected pair.

5. Method according to the preceding claim, wherein the value of said sum of the quadratic errors calculated is emitted together with the pair of revised estimates selected, so as to provide useful information for the correction of errors to a downstream error corrector.

6. Method according to any one of the preceding claims, wherein a coefficient of rotation for cancellation of the first series of coefficients, used for a set (tx1c1) of reconstructed signals relating to a given symbol time t+1, is updated for use at the next symbol time (t+2) subtracting from the coefficient ($\varphi11_t$) the product of the slicer residual error (err11i) associated with a reconstructed signal (tx1c1i) processed using the said coefficient ($\varphi11_t$) and with the respective estimate (tx1^cli) of the symbol carried by the respective transmitted signal (tx2), both relating to the given symbol time (t+1);
wherein said estimate (tx1^c1i) is an estimate corresponding to the symbol estimate (tx1^j) of the transmitted signal (tx1) of the pair selected as pair of revised estimates,
and wherein said residual error is multiplied by the other symbol estimate (tx2^i) of the selected pair.

7. Method according to the preceding claim, **characterized in that** the phase rotation coefficients for cancellation are emitted together with the selected pair of revised estimates, so as to provide a reconstruction and estimation block (DMR) of the radio link with updated phase rotation coefficients for cancellation, able to improve the reliability of the successive initial estimates emitted by the said block (DMR).

8. Method according to any one of the preceding claims, wherein the phase rotation coefficients ($\varphi11r$, $\varphi12r$, $\varphi21r$, $\varphi22r$) of the second series of coefficients are updated by means of a method which comprises the calculation of a correlation such that a coefficient $\varphi r_t$) used for a given symbol time t+1 is updated, for use at the next symbol time (t+2), subtracting from the said coefficient the product of the slicer residual error (err11i) associated with a reconstructed signal (tx1c1i) processed using the said coefficient ($\varphi11_t$) and with the respective estimate (tx1^cli) of the symbol carried by the respective transmitted signal (tx2), both relating to the given symbol time (t+1);

wherein said estimate (tx1^c1i) is an estimate corresponding to the symbol estimate (tx1^j) of the transmitted signal (tx1) of the pair selected as pair of revised estimates,
and wherein said slicer error (err11i) is multiplied by the said reconstructed signal (tx1c1i).

9. Revision apparatus (100) for revising:

- a first initial estimate (tx1^) of a symbol carried by a first signal (tx1) transmitted by a first transmitting antenna (AT1) of a MIMO, Line-Of-Sight, optical range, radio relay link, and
- a second initial estimate (tx2^) of a symbol carried by a second signal (tx2) transmitted by a second transmitting antenna (AT2) of the MIMO LOS radio relay link,
the two signals (tx1,tx2) being transmitted in total mutual interference on the MIMO LOS radio relay link,
the first initial estimate (tx1^) being output by a decider of a respective first branch (c1) for reception and reconstruction of the link, following a process for demodulation and reconstruction of the first transmitted signal (tx1) by means of mutual cancellation of a first signal (rx1) received on a first receiving antenna (AR1) of the radio link upstream of the first reception branch (c1) and a second signal (rx2) received by a second receiving antenna (AR2) of the radio link, wherein the signals received (rx1,rx2) each comprise said first signal (tx1) and second signal (tx2) transmitted in total interference,

the second initial estimate (tx2^) being emitted by a decider of a respective second branch (c2) for reception and reconstruction downstream of the second receiving antenna (AR2) of the radio link, following a process for demodulation and reconstruction of the second transmitted signal (tx2), by means of mutual cancellation of the second signal (rx2) received by the second antenna (AR2) and the first signal received (rx1), **characterized in that** it comprises:

- a module (110) for construction of an extended set (tx1^; tx2^) of possible estimates of the symbol carried by the transmitted signal (tx1;tx2) for each symbol estimate (tx1^,tx2^) of the transmitted signal (tx1;tx2) received at the input; each extended set (tx1^; tx2^) comprising the estimated symbol (tx1^; tx2^) received at the input and at least the eight symbols adjacent thereto in the modulation constellation;
- a memory comprising registers for storing the various elements processed and/or necessary for the processing operations;
- a cancellation node (120) for receiving at its input:

  ▪ each received and demodulated signal (rx1,rx2) originating from an associated antenna (AR1,AR2) and an associated reception/demodulation block of a respective reception and reconstruction branch (c1,c2);
  ▪ each set (tx1^; tx2^) of possible estimates of the symbol carried by one of the signals transmitted (tx1;tx2) containing a respective initial estimate (tx1^;tx2^) of the symbol transmitted and the respective adjacent symbols in the modulation constellation;

and for providing at its output, for each signal received (rx1;rx2):

  -- a respective first set (tx1c1; tx1c2) of reconstruction signals of the first signal transmitted (tx1), each reconstructed by means of non-linear cancellation performed by cancelling from the respective signal received (rx1,rx2) an interfering component (tx2), by means of a respective symbol of the set (tx2^) of possible estimates of the symbol carried by the second transmitted signal (tx2);
  -- and a respective second set (tx2c1; tx2c2) of reconstruction signals of the second signal transmitted (tx2), each reconstructed by means of non-linear cancellation performed by cancelling from the respective signal received (rx1,rx2) an interfering component (tx1), by means of a respective symbol of the set (tx1^) of possible estimates of the symbol carried by the first transmitted signal (txl);

- a slicer module, for providing an estimate (tx1^c1$_i$; tx2^c1$_i$; tx1^c2$_i$; tx2^c2$_i$) of the constellation symbol associated with each reconstructed signal, by means of decision on the basis of the respective reconstructed signal (tx1c1$_i$; tx2c1$_i$; tx1c2$_i$; tx2c2$_i$);
- a selector module for selecting a pair (tx1^j;tx2^i) of possible constellation symbols, one being carried by the first transmitted signal (tx1) and one being carried by the second transmitted signal (tx2), respectively, the selected pair comprising:

  ∘ a j-th symbol (tx1^j) of the extended set (tx1^) of possible estimates of the symbol carried by the first transmitted signal (tx1), which corresponds:

- both to the symbol sliced (tx1^c1i) on the basis of the reconstruction signal (tx1^c1i) of the first transmitted signal, reconstructed by subtracting from the first signal received (rx1) an i-th symbol (tx2^i) of the set (tx2^) of possible estimates of the symbol carried by the second transmitted signal (tx2),
  - and to the symbol sliced (tx1^c2i) on the basis of the reconstruction signal (tx1c2i) of the first transmitted signal (tx1), reconstructed by subtracting from the second signal received (rx2) that same i-th symbol (tx2^i) of the set (tx2^) of possible estimates of the symbol carried by the second transmitted signal (tx2); and

  - an i-th symbol (tx2$^\wedge_i$) of the extended set (tx2^) of possible estimates of the symbol carried by the second transmitted signal (tx2), which corresponds:

    - both to the symbol (tx2^c1$_j$) sliced on the basis of the reconstruction signal (tx2^c1$_j$) of the second transmitted signal, reconstructed by subtracting from the first signal received (rx1) that same j-th symbol (tx1^j) of the set (tx1^) of possible estimates of the symbol carried by the first transmitted signal (tx1),
    - and to the symbol (tx2^c2$_j$) sliced on the basis of the reconstruction signal (tx2c2$_j$) of the second transmitted signal (tx2), reconstructed by subtracting from the second signal received (rx2) that same j-th symbol (tx1^j) of the set of possible symbols carried by the first transmitted signal (txl);

  - outputs for emission of a selected pair (tx1^j;tx2^$_i$) of estimates as revised estimates (tx1^' ; tx2^') of the symbol carried respectively by the first transmitted signal (txl) and second transmitted signal (tx2).

10. Apparatus according to the preceding claim, **characterized in that** said memory comprises registers in which a first series of rotation coefficients ($\varphi_{11}$, $\varphi_{12}$, $\varphi_{21}$, $\varphi_{22}$) for cancellation and a second series of rotation coefficients ($\varphi_{11r}$, ($\varphi_{12r}$, $\varphi_{21r}$, $\varphi_{22r}$) are saved; and **in that** the cancellation node for forming reconstruction signals of one of the signals transmitted comprises a respective first rotator for rotating the symbol estimate to be subtracted from the respective received signal (rx1;rx2) by a respective first rotation coefficient ($\varphi_{11}$, $\varphi_{12}$, $\varphi_{21}$, $\varphi_{22}$) for the cancellation, and a respective second rotator for rotating the result of the subtraction by a respective second rotation coefficient ($\varphi_{11r}$, $\varphi_{12r}$, $\varphi_{21r}$, $\varphi_{22r}$).

11. Apparatus according to any one of Claims 9 and 10, **characterized in that** it is adapted for use in radio relays in which one of the two signals transmitted (tx1;tx2) comprises pilot symbols in its sequence of carried symbols and **in that**, at a symbol time at which one of said pilot symbols is present, the selector module is adapted to select a pair of symbol estimates for emission comprising said pilot symbol as a revised estimate of the symbol carried by the respective transmitted signal.

12. Apparatus according to any one of Claims 9 to 11, comprising a module for calculating, for each selected pair of estimates (tx1^j; tx2^i), the sum of the slicer quadratic errors associated with:

    - the estimates (tx1^c1$_i$,tx1^c2$_i$) of the symbol carried by the first transmitted signal (tx1), decided on the basis of respective reconstructed signals (tx1c1$_i$,tx1c2$_i$), to which the estimate (tx1^j) of the symbol carried by the first transmitted signal (tx1) of the selected pair corresponds, or
    - the estimates (tx2^c1j; tx2^c2$_j$) of the symbol carried by the second transmitted signal (tx2), decided on the basis of respective reconstructed signals (tx2c1j; tx2c2$_j$) to which the estimate (tx2^i) of the symbol carried by the second transmitted signal (tx2) of the selected pair corresponds,

    and in that the selector modules selects for the emission the pair of estimates selected with the minimum value of the sum (met1 or met2) of the residual quadratic errors at the decider.

13. Apparatus according to the preceding claim, comprising outputs for the emission of the value of said sum of the quadratic errors calculated, together with the pair of revised estimates selected, so as to provide useful information for the correction of errors to an error corrector downstream of the apparatus.

**Patentansprüche**

1. Verfahren zur Überprüfung von

    - einer ersten Initialen Schätzung (tx1^) eines Symbols, das von einem ersten Signal (txl) getragen wird, das von einer ersten Sendeantenne (AT1) einer MIMO, LOS (Line-Of-Sight) Richtfunkverbindung übertragen wird und

- einer zweiten Initialen Schätzung (tx2^) eines Symbols, das von einem zweiten Signal (tx2) getragen wird, das von einer zweiten Sendeantenne (AT2) einer MIMO LOS-Richtfunkverbindung übertragen wird,

wobei die beiden Signale (tx1,tx2) in völliger gegenseitiger Interferenz auf der MIMO LOS-Funkverbindung übertragen werden,

wobei die erste initiale Schätzung (tx1^) von einem Slicer eines jeweiligen ersten Verbindungszweiges (c1) zum Empfangen und Rekonstruieren nach einem Verfahren zur Demodulation und Rekonstruktion des ersten Sendesignals (txl) durch gegenseitiges Löschen eines ersten Signals (rx1), das auf einer ersten Antenne (AR1) der Funkverbindung stromaufwärts des ersten Empfangszweiges (c1) empfangen wird, und eines zweiten Signals (rx2), das von einer zweiten Empfangsantenne (AR2) der Verbindung empfangen wird, ausgegeben wird, wobei die empfangenen Signale (rx1, rx2) jeweils das erste Signal (tx1) und das zweite Signal (tx2) umfassen, die in totaler gegenseitiger Interferenz übertragen werden,

wobei die zweite initiale Schätzung (tx2^) von einem Slicer eines jeweiligen zweiten Zweiges (c2) zum Empfangen und Rekonstruieren stromabwärts der zweiten Empfangsantenne (AR2) der Funkverbindung nach einem Verfahren zur Demodulation und Rekonstruktion des zweiten gesendeten Signals (tx2) durch gegenseitige Löschung des von der zweiten Antenne (AR2) empfangenen zweiten Signals (rx2) und des ersten Empfangssignals (rx1) ausgegeben wird,

**dadurch gekennzeichnet, dass** es die folgenden Schritte umfasst:

- für jede initiale Schätzung (tx1^; tx2^) des übertragenen Symbols: Bildung einer erweiterten Menge (tx1^; tx2^) möglicher Symbole, die vom jeweiligen Sendesignal (tx1^; tx2^) getragen werden, umfassend mindestens die Modulationskonstellationssymbole direkt angrenzend an die jeweilige initiale Schätzung (tx1^; tx2^) und die initiale Schätzung (tx1^; tx2^) selbst;
- Bildung eines ersten Satzes von Rekonstruktionssignalen (tx1c1$_i$) des ersten gesendeten Signals (tx1), die jeweils durch Subtraktion eines entsprechenden i-ten Elements des erweiterten Satzes möglicher Symbole, die vom zweiten gesendeten Signal (tx2) getragen werden, von dem ersten empfangenen Signal (rx1) erhalten werden;
- Bildung eines zweiten Satzes von Rekonstruktionssignalen (tx1c2$_i$) des ersten Sendesignals (tx1), die jeweils durch Subtraktion eines entsprechenden i-ten Elements des erweiterten Satzes möglicher Symbole, die vom zweiten Sendesignal (tx2) getragen werden, von dem zweiten empfangenen Signal (rx2) erhalten werden;
- Bildung eines ersten Satzes von Rekonstruktionssignalen (tx2c1$_i$) des zweiten Sendesignals (tx2), die jeweils durch Subtraktion eines entsprechenden i-ten Elements des erweiterten Satzes möglicher Symbole, die vom ersten Sendesignal (txl) getragen werden, von dem ersten empfangenen Signal (rx1) erhalten werden;
- Bildung eines zweiten Satzes von Rekonstruktionssignalen (tx2c2$_i$) des zweiten Sendesignals (tx2), die jeweils durch Subtraktion eines entsprechenden i-ten Elements des erweiterten Satzes möglicher Symbole, die vom ersten Sendesignal (tx1) getragen werden, von dem zweiten empfangenen Signal (rx2) erhalten werden;
- Schätzung (tx1^c1i; tx2^c1i; tx1^c2i; tx2^c2i) des jedem rekonstruierten Signal zugeordneten Konstellationssymbols durch Entscheidung auf der Grundlage des jeweiligen rekonstruierten Signals (tx1c1i; tx2c1i; tx1c2i; tx2c2i);
- Auswählen eines Paares (tx1^j;tx2^i) möglicher Konstellationssymbole, wobei jeweils eines vom ersten Sendesignal und eines vom zweiten Sendesignal (tx1;tx2) getragen wird, wobei das ausgewählte Paar (tx1^j; tx2^i) umfasst:

• ein j-tes Symbol (tx1^j) des erweiterten Satzes (tx1^) möglicher Schätzungen des Symbols, das vom ersten übertragenen Signal (tx1) getragen wird, was entspricht:

  ▪ sowohl auf das Symbol (tx1^c1i), das auf der Grundlage des Rekonstruktionssignals (tx1c1i) des ersten Sendesignals geschnitten wurde, rekonstruiert, indem vom ersten empfangenen Signal (rx1) ein i-tes Symbol (tx2^i) des Satzes (tx2^) möglicher Symbole, die vom zweiten Sendesignal getragen werden, subtrahiert wird,
  ▪ und auf das Symbol (tx1^c2i), das auf der Grundlage des Rekonstruktionssignals (tx1c2i) des ersten Sendesignals (tx1) geschnitten wurde, rekonstruiert durch Subtraktion des gleichen i-ten Symbols (tx2^i) des Satzes (tx2^) möglicher Symbole, die vom zweiten Sendesignal getragen werden von dem zweiten empfangenen Signal (rx2); und

• ein i-tes Symbol (tx2^$_i$) des erweiterten Satzes (tx2^) möglicher Schätzungen des Symbols, das vom zweiten Sendesignal (tx2) getragen wird, das entspricht:

- sowohl auf das Symbol (tx2^c1$_j$), das auf der Grundlage des Rekonstruktionssignals (tx2c1$_j$) des zweiten Sendesignals geschnitten wurde, rekonstruiert durch Subtraktion des j-ten Symbols (tx1^j) der Menge (tx1^) möglicher Symbole, die vom ersten Sendesignal (txl) getragen werden, vom ersten empfangenen Signal (rx1),
- und auf das Symbol (tx2^c2$_j$), das auf der Grundlage des Rekonstruktionssignals (tx2c2$_j$) des zweiten Sendesignals (tx2) geschnitten wurde, rekonstruiert durch Subtraktion des gleichen j-ten Symbols (tx1^j) des vom ersten Sendesignal (tx1) getragenen Satzes möglicher Symbole vom zweiten empfangenen Signal (rx2);

- Emission eines Paares (tx1^j;tx2^$_i$) von Schätzungen, die als revidierte Schätzungen (tx1^;tx2^') des Symbols ausgewählt wurden, das jeweils von dem ersten und zweiten übertragenen Signal (tx1;tx2) getragen wird.

2. Verfahren nach Anspruch 1, wobei jeder Schritt zur Bildung eines Satzes von Rekonstruktionssignalen eines der übertragenen Signale die Drehung der Symbolschätzung umfasst, die von dem jeweils empfangenen Signal (rx1;rx2) um einen entsprechenden ersten Koeffizienten ($\varphi_{11}$, $\varphi_{12}$, $\varphi_{21}$,$\varphi_{22}$) der Drehung für die Löschung abzuziehen ist, und die Drehung des Ergebnisses der Abziehungum einen entsprechenden zweiten Koeffizienten ($\varphi_{11r}$, $\varphi_{12r}$, $\varphi_{21r}$,$\varphi_{22r}$) der Drehung.

3. Verfahren nach einem der vorhergehenden Ansprüche, wobei, wenn eines der beiden übertragenen Signale (tx1; tx2) Pilotsymbole in seiner Folge von getragenen Symbolen umfasst, das zur Emission ausgewählte Paar (tx1^j; tx2^i) zum Symbolzeitpunkt eines empfangenen Pilotsymbols das Pilotsymbol als eine überarbeitete Schätzung (tx1^'; tx2^') des vom jeweiligen übertragenen Signal getragenen Symbols umfasst.

4. Verfahren nach einem der vorhergehenden Ansprüche, wobei das Paar von Schätzungen (tx1^j; tx2^i), die für die Emission ausgewählt wurden, derjenige mit dem Mindestwert der Summe (met1; met2) der quadratische Slicer-Restfehler ist, die mit:

- die Schätzungen (tx1^c1$_i$ ,tx1^c2$_i$) des vom ersten Sendesignal (tx1) getragenen Symbols, die auf der Grundlage der jeweiligen rekonstruierten Signale (tx1c1$_i$ ,tx1c2$_i$) geschnitten sind, denen die Schätzung (tx1^j) des vom ersten Sendesignal (tx1) des ausgewählten Paares getragenen Symbols entspricht, oder
- die Schätzungen (tx2^c1j; tx2^c2j) des Symbols, das vom zweiten Sendesignal (tx2) getragen wird, die auf der Grundlage der jeweils rekonstruierten Signale (tx2clj; tx2c2$_j$), dem die Schätzung (tx2^i) des vom zweiten Sendesignal (tx2) des ausgewählten Paares getragenen Symbols entspricht,wobei der Auswahlschritt die Berechnung des Restfehlers für jede durchgeführte Schätzung entsprechend einer Symbolschätzung eines ausgewählten Paares und die Berechnung der Summe der quadratischen Restfehler für jedes ausgewählte Paar umfasst.

5. Verfahren nach dem vorhergehenden Anspruch, wobei der Wert der Summe der berechneten quadratischen Fehler zusammen mit dem Paar ausgewählter revidierter Schätzungen ausgegeben wird, um einem nachgeschalteten Fehlerkorrektor nützliche Informationen für die Korrektur von Fehlern bereitzustellen.

6. Verfahren nach einem der vorhergehenden Ansprüche, wobei ein Rotationskoeffizient zum Löschen der ersten Reihe von Koeffizienten, der für einen Satz (tx1c1) von rekonstruierten Signalen verwendet wird, die sich auf eine bestimmte Symbolzeit t+1 beziehen, zur Verwendung zum nächsten Symbolzeitpunkt (t+2) aktualisiert wird, indem das Produkt des Slicer-Restfehlers (err11i), der einem rekonstruierten Signal (tx1c1i) zugeordnet ist, das unter Verwendung des Koeffizienten ($\phi$11tt) verarbeitet wurde, und der jeweiligen Schätzung (tx1^c1i) des Symbols, das vom jeweiligen Sendesignal (tx2) getragen wird, von dem Koeffizienten ($\varphi_{11t}$) subtrahiert wird, beide bezogen auf die angegebene Symbolzeit (t+1);wobei die Schätzung (tx1^c1i) eine Schätzung ist, die der Symbolschätzung (tx1^j) des übertragenen Signals (tx1) des Paares entspricht, das als Paar von überarbeiteten Schätzungen ausgewählt ist, und wobei der Restfehler mit der anderen Symbolschätzung (tx2^i) des ausgewählten Paares multipliziert wird.

7. Verfahren nach dem vorhergehenden Anspruch, **dadurch gekennzeichnet, dass** die Phasendrehzahlkoeffizienten für die Löschung zusammen mit dem ausgewählten Paar überarbeiteter Schätzungen ausgegeben werden, um einen Rekonstruktions- und Schätzblock (DMR) der Funkverbindung mit aktualisierten Phasendrehzahlkoeffizienten für die Löschung bereitzustellen, der in der Lage ist, die Zuverlässigkeit der aufeinanderfolgenden initalen Schätzungen, die von dem Block (DMR) gesendet werden, zu verbessern.

**8.** Verfahren nach einem der vorstehenden Ansprüche, wobei die Phasendrehzahlkoeffizienten ($\varphi_{11r}$, $\varphi_{12r}$, $\varphi_{21r}$, $\varphi_{22r}$) der zweiten Reihe von Koeffizienten mittels eines Verfahrens aktualisiert werden, das die Berechnung einer Korrelation umfasst, so dass ein für eine bestimmte Symbolzeit t+1 verwendeter Koeffizient $\varphi r_t$) zur Verwendung zum nächsten Symbolzeitpunkt (t+2) aktualisiert wird, Subtrahieren des Produkts des Slicer-Restfehlers (err11i) von dem Koeffizienten, der einem rekonstruierten Signal (tx1c1i) zugeordnet ist, das unter Verwendung des Koeffizienten ($\phi 11_t$) und mit der jeweiligen Schätzung (tx1^c1i) des Symbols, das vom jeweiligen Sendesignal (tx2) getragen wird, verarbeitet wird, beide bezogen auf die gegebene Symbolzeit (t+1);wobei die Schätzung (tx1^c1i) eine Schätzung ist, die der Symbolschätzung (tx1^j) des übertragenen Signals (tx1) des Paares entspricht, das als Paar von überarbeiteten Schätzungen ausgewählt ist,
und wobei der Slicerfehler (err11i) mit dem rekonstruierten Signal (tx1c1i) multipliziert wird.

**9.** Revisionsvorrichtung (100) zum Überprüfen:

- einer ersten intialen erste Schätzung (tx1^) eines Symbols, das von einem ersten Signal (tx1) getragen wird, das von einer ersten Sendeantenne (AT1) eines MIMO, Line-Of-Sight, optischer Reichweite, Richtfunkverbindung, und
- einer zweiten intialen Schätzung (tx2^) eines Symbols, das von einem zweiten Signal (tx2) getragen wird, das von einer zweiten Sendeantenne (AT2) der MIMO LOS-Funkverbindung übertragen wird,

wobei die beiden Signale (tx1,tx2) in völliger gegenseitiger Beeinflussung auf der MIMO LOS-Funkverbindung übertragen werden,
wobei die erste anfängliche Schätzung (tx1^) durch einen Entscheider eines jeweiligen ersten Zweiges (c1) zum Empfangen und Rekonstruieren der Verbindung ausgegeben wird, nach einem Verfahren zur Demodulation und Rekonstruktion des ersten Sendesignals (tx1) durch gegenseitige Löschung eines ersten Signals (rx1), das auf einer ersten Empfangsantenne (AR1) der Funkverbindung stromaufwärts des ersten Empfangszweiges (c1) empfangen wird, und eines zweiten Signals (rx2), das von einer zweiten Empfangsantenne (AR2) der Funkverbindung empfangen wird, wobei die empfangenen Signale (rx1, rx2) jeweils das erste Signal (tx1) und das zweite Signal (tx2) umfassen, die in totaler gegenseitiger Interferenz übertragen werden,
wobei die zweite intiale Schätzung (tx2^) von einem Entscheider eines jeweiligen zweiten Zweiges (c2) zum Empfangen und Rekonstruieren stromabwärts der zweiten Empfangsantenne (AR2) der Funkverbindung nach einem Verfahren zur Demodulation und Rekonstruktion des zweiten Sendesignals (tx2) mittels gegenseitiger Löschung des von der zweiten Antenne (AR2) empfangenen zweiten Signals (rx2) und des ersten empfangenen Signals (rx1) abgegeben wird, **dadurch gekennzeichnet, dass** sie umfasst:

- ein Modul (110) zum Aufbau eines erweiterten Satzes (tx1^; tx2^) möglicher Schätzungen des durch das Sendesignal (tx1;tx2) getragenen Symbols für jede Symbolschätzung (tx1^,tx2^) des am Eingang empfangenen Sendesignals (tx1;tx2^); wobei jeder erweiterte Satz (tx1^; tx2^) das am Eingang empfangene geschätzte Symbol (tx1^; tx2^) und mindestens die acht daran angrenzenden Symbole in der Modulationskonstellation umfasst;
- einen Speicher, der Register zum Speichern der verschiedenen verarbeiteten und/oder für die Verarbeitungsvorgänge erforderlichen Elemente umfasst;
- einen Auslöschungsknoten (120) zum Empfangen an seinem Eingang:

  ▪ jedes empfangene und demodulierte Signal (rx1,rx2), das von einer zugehörigen Antenne (AR1,AR2) und einem zugehörigen Empfangs-/Demodulationsblock eines jeweiligen Empfangs- und Rekonstruktionszweigs (c1,c2) stammt;
  ▪ jeder Satz (tx1^ ; tx2^) möglicher Schätzungen des von einem der übertragenen Signale (txl;tx2) getragenen Symbols, der eine jeweilige Anfangsschätzung (tx1^;tx2^) des übertragenen Symbols und der jeweiligen benachbarten Symbole in der Modulationskonstellation enthält;

und zum Bereitstellen an seinem Ausgang für jedes empfangene Signal (rx1;rx2):

einen jeweiligen ersten Satz (tx1c1 ; tx1c2) von Rekonstruktionssignalen des ersten gesendeten Signals (tx1), die jeweils mittels nichtlinearer Löschung rekonstruiert werden, die durch Löschung einer störenden Komponente (tx2) aus dem jeweiligen empfangenen Signal (rx1,rx2) mittels eines entsprechenden Symbols des Satzes (tx2^) möglicher Schätzungen des vom zweiten gesendeten Signal (tx2) getragenen Symbols erfolgt;
und einen jeweiligen zweiten Satz (tx2c1; tx2c2) von Rekonstruktionssignalen des zweiten gesendeten Signals (tx2), die jeweils mittels nichtlinearer Löschung rekonstruiert werden, die durch Löschung einer störenden Komponente (tx1) aus dem jeweiligen empfangenen Signal (rx1, rx2) mittels eines entsprechenden Symbols des Satzes (tx1^) von möglichen Schätzungen des vom ersten gesendeten Signal (tx1) getragenen Symbols durchgeführt wird;

- ein Slicermodul, um eine Schätzung (tx1^c1$_i$; tx2^c1$_i$; tx1^c2$_i$; tx2^c2$_i$) des jedem rekonstruierten Signal zugeordneten Konstellationssymbols durch Entscheidung auf der Grundlage des jeweiligen rekonstruierten Signals (tx1c1$_i$ ; tx2c1$_i$ ; tx1c2$_i$ ; tx2c2$_i$) bereitzustellen;

- ein Auswahlmodul zum Auswählen eines Paares (tx1^j;tx2^i) möglicher Konstellationssymbole, wobei jeweils eines vom ersten Sendesignal (tx1) und eines vom zweiten Sendesignal (tx2) getragen wird, wobei das ausgewählte Paar umfasst:

o ein j-tes Symbol (tx1^j) des erweiterten Satzes (tx1^) von möglichen Schätzungen des Symbols, das vom ersten übertragenen Signal (tx1) getragen wird, was entspricht:

- sowohl zum geschnittenen Symbol, das auf der Grundlage des Rekonstruktionssignals (tx1^c1i) des ersten Sendesignals geschnitten wurde, rekonstruiert, indem vom ersten empfangenen Signal (rx1) ein i-tes Symbol (tx2^i) der Menge (tx2^) möglicher Schätzungen des Symbols, das vom zweiten Sendesignal (tx2) getragen wird, subtrahiert wird,
- und auf das geschnittene Symbol, das auf der Grundlage des Rekonstruktionssignals (tx1c2i) des ersten Sendesignals (tx1) geschnitten wurde, rekonstruiert durch Subtraktion des gleichen i-ten Symbols (tx2^i) des Satzes (tx2^) von dem zweiten empfangenen Signal (rx2) von möglichen Schätzungen des vom zweiten Sendesignal (tx2) getragenen Symbols; und

o ein i-tes Symbol (tx2^$_i$) des erweiterten Satzes (tx2^) möglicher Schätzungen des Symbols, das vom zweiten Sendesignal (tx2) getragen wird, das entspricht:

- sowohl auf das Symbol (tx2^c1j), das auf der Grundlage des Rekonstruktionssignals (tx2^c1$_j$) des zweiten Sendesignals geschnitten wurde, rekonstruiert, indem vom ersten empfangenen Signal (rx1) das gleiche j-te Symbol (tx1^j) des Satzes (tx1^) der möglichen Schätzungen des Symbols, das vom ersten Sendesignal (tx1) getragen wird, subtrahiert wird,
- und auf das Symbol (tx2^c2j), das auf der Grundlage des Rekonstruktionssignals (tx2c2j) des zweiten Sendesignals (tx2) geschnitten wurde, rekonstruiert durch Subtraktion des gleichen j-ten Symbols (tx1^j) des vom ersten Sendesignal (tx1) getragenen Satzes möglicher Symbole vom zweiten empfangenen Signal (rx2);

- Ausgänge zum Senden eines ausgewählten Paares (tx1^j;tx2^$_i$) von Schätzungen als revidierte Schätzungen (tx1^;tx2^') des Symbols, das jeweils vom ersten Sendesignal (tx1) und zweiten Sendesignal (tx2) getragen wird.

10. Vorrichtung nach dem vorstehenden Anspruch, **dadurch gekennzeichnet, dass** der Speicher Register umfasst, in denen eine erste Reihe von Rotationskoeffizienten ($\varphi_{11}$, $\varphi_{12}$, $\varphi_{21}$, $\varphi_{22}$) zum Löschen und eine zweite Reihe von Rotationskoeffizienten ($\varphi_{11r}$, $\varphi_{12r}$, $\varphi_{21r}$, $\varphi_{22r}$) gespeichert sind; und dass der Auslöschungsknoten zum Bilden von Rekonstruktionssignalen eines der übertragenen Signale jeweils einen ersten Rotator zum Drehen der vom jeweiligen Empfangssignal (rx1;rx2) abzuziehenden Symbolschätzung um einen jeweiligen ersten Rotationskoeffizienten ($\varphi_{11}$, $\varphi_{12}$, $\varphi_{21}$, $\varphi_{22}$) für die Löschung und einen jeweiligen zweiten Rotator zum Drehen des Ergebnisses der Subtraktion um einen jeweiligen zweiten Rotationskoeffizienten $\varphi_{11r}$, $\varphi_{12r}$, $\varphi_{21r}$, $\varphi_{22r}$) umfasst.

11. Vorrichtung nach einem der Ansprüche 9 und 10, **dadurch gekennzeichnet, dass** sie zur Verwendung in Funkrelais geeignet ist, in denen eines der beiden übertragenen Signale (tx1; tx2) Pilotsymbole in ihrer Folge von getragenen Symbolen umfasst, und dass das Auswahlmodul zu einem Symbolzeitpunkt, zu dem eines der Pilotsymbole vorhanden ist, geeignet ist, ein Paar von Symbolschätzungen für die Emission auszuwählen, die das Pilotsymbol als überarbeitete Schätzung des vom jeweiligen übertragenen Signal getragenen Symbols umfassen.

12. Vorrichtung nach einem der Ansprüche 9 bis 11, umfassend ein Modul zum Berechnen der Summe der quadratischen Fehler des Slicers für jedes ausgewählte Paar von Schätzungen (tx1^j; tx2^i) in Bezug auf:

- die Schätzungen (tx1^c1$_i$ ,tx1^c2$_i$) des vom ersten Sendesignal (tx1) getragenen Symbols, die auf der Grundlage von jeweils rekonstruierten Signalen (tx1c1$_i$ ,txlc2i) bestimmt wurden, denen die Schätzung (tx1^j) des vom ersten Sendesignal (tx1) des ausgewählten Paares getragenen Symbols entspricht, oder

- die Schätzungen (tx2^c1j; tx2^c2$_j$) des Symbols, das vom zweiten Sendesignal (tx2) getragen wird, auf der Grundlage der jeweils rekonstruierten Signale (tx2clj; tx2c2$_j$), dem die Schätzung (tx2^i) des Symbols entspricht, das vom zweiten Sendesignal (tx2) des ausgewählten Paares getragen wird, und dadurch, dass die Auswahlmodule für die Emission das Paar von Schätzungen auswählen, das mit dem Minimalwert der Summe (met1 oder met2) der restlichen quadratischen Fehler am Entscheider ausgewählt wurde.

13. Vorrichtung nach dem vorhergehenden Anspruch, umfassend Ausgaben für die Emission des Wertes der Summe der berechneten quadratischen Fehler zusammen mit dem Paar der ausgewählten überarbeiteten Schätzungen, um nützliche Informationen für die Fehlerkorrektur an einen Fehlerkorrektor stromabwärts der Vorrichtung bereitzustellen.

## Revendications

1. Procédé de révision :

- d'une première estimation initiale (tx1^) d'un symbole porté par un premier signal (tx1) transmis par une première antenne de transmission (AT1) d'une liaison relai radio d'un système MIMO (Entrées Multiples, Sorties Multiples), LOS (à visibilité directe), et
- d'une seconde estimation initiale (tx2^) d'un symbole porté par un second signal (tx2) transmis par une seconde antenne de transmission (AT2) de la liaison relai radio d'un système MIMO LOS,

les deux signaux (tx1, tx2) étant transmis en interférence mutuelle totale sur la liaison relai radio du système MIMO LOS,

la première estimation initiale (tx1^) étant en sortie d'un dispositif d'écrêtage d'une première branche de liaison (c1) respective pour la réception et la reconstruction, à la suite d'un processus de démodulation et de reconstruction du premier signal transmis (tx1) grâce à une 5 annulation mutuelle d'un premier signal (rx1) reçu sur une première antenne (AR1) de la liaison radio en amont de la première branche de réception (c1) et d'un second signal (rx2) reçu par une seconde antenne de réception (AR2) de la liaison, dans lequel les signaux reçus (rx1, rx2) comprennent chacun ledit premier signal (tx1) et ledit second signal (tx2) transmis en totale interférence,

la seconde estimation initiale (tx2^) étant en sortie d'un dispositif d'écrêtage d'une seconde branche (c2) respective pour la réception et la reconstruction en aval de la seconde antenne de réception (AR2) de la liaison radio, à la suite d'un processus de démodulation et de reconstruction du second signal transmis (tx2), grâce à une annulation mutuelle du second signal (rx2) reçu par la seconde antenne (AR2) et le premier signal (rx1) reçu,

**caractérisé en ce qu'**il comprend les étapes suivantes :

- pour chaque estimation initiale (tx1^ ; tx2^) du symbole transmis : formation d'un ensemble élargi (tx1^ ; tx2^) de symboles possibles portés par le signal transmis (tx1^ ; tx2^) respectif comprenant au moins les symboles de constellation de modulation directement adjacents à l'estimation initiale (tx1^ ; tx2^) respective et l'estimation initiale (tx1^ ; tx2^) elle-même ;
- formation d'un premier ensemble de signaux de reconstruction (tx1c1i) du premier signal (tx1) transmis, chacun étant obtenu en soustrayant du premier signal (rx1) reçu un $i^{ème}$ élément respectif de l'ensemble élargi de symboles possibles portés par le second signal (tx2) transmis ;
- formation d'un second ensemble de signaux de reconstruction (tx1c2$_i$) du premier signal (tx1) transmis, chacun étant obtenu en soustrayant du second signal (rx2) reçu un $i^{ème}$ élément respectif de l'ensemble élargi de symboles possibles portés par le second signal (tx2) transmis ;
- formation d'un premier ensemble de signaux de reconstruction (tx2c1$_i$) du second signal (tx2) transmis, chacun étant obtenu en soustrayant du premier signal (rx1) reçu un $i^{ème}$ élément respectif de l'ensemble élargi de symboles possibles portés par le premier signal (tx1) transmis ;
- formation d'un second ensemble de signaux de reconstruction (tx2c2$_i$) du second signal (tx2) transmis, chacun étant obtenu en soustrayant du second signal (rx2) reçu un $i^{ème}$ élément respectif de l'ensemble élargi de symboles possibles portés par le premier signal (tx1) transmis ;
- estimation (tx1^c1$_i$ ; tx2^c1$_i$ ; tx1^c2$_i$ ; tx2^c2$_i$) du symbole de constellation associé à chaque signal reconstruit, grâce à une décision basée sur le signal reconstruit (tx1c1$_i$ ; tx2c1$_i$ ; tx1c2$_i$ ; tx2c2$_i$) respectif ;
- sélection d'une paire (tx1^j ; tx2^i) de symboles de constellation possibles, un étant porté par le premier signal transmis et un étant porté par le second signal transmis (tx1 ; tx2), respectivement, la paire (tx1^j ; tx2^i) choisie comprenant :

○ un $j^{ieme}$ symbole (tx1^j) de l'ensemble élargi (tx1^) des estimations possibles du symbole porté par le premier signal (tx1) transmis, qui correspond :

■ à la fois au symbole (tx1^c1i) écrêté sur la base du signal de reconstruction (tx1c1i) du premier signal transmis, reconstruit en soustrayant du premier signal (rx1) reçu un $i^{eme}$ symbole (tx2^i) de l'ensemble (tx2^) de symboles possibles portés par le second signal transmis,
■ et au symbole (tx1^c2i) écrêté sur la base du signal de reconstruction (tx1c2$_i$) du premier signal (tx1) transmis, reconstruit en soustrayant du second signal (rx2) reçu ce même $i^{ème}$ symbole (tx2^i) de l'ensemble (tx2^) de symboles possibles portés par le second signal (tx2) transmis ; et

○ un $i^{ieme}$ symbole (tx2^i) de l'ensemble élargi (tx2^) des estimations possibles du symbole porté par le second signal (tx2) transmis, qui correspond :

■ à la fois au symbole (tx2^c1$_j$) écrêté sur la base du signal de reconstruction (tx2c1j) du second signal transmis, reconstruit en soustrayant du premier signal (rx1) reçu ce $j^{eme}$ symbole (tx1^j) de l'ensemble (tx1^) de symboles possibles portés par le premier signal (tx1) transmis,
■ et au symbole (tx2^c2j) écrêté sur la base du signal de reconstruction (tx2c2j) du second signal (tx2) transmis, reconstruit en soustrayant du second signal (rx2) reçu ce même $j^{eme}$ symbole (tx1^j) de l'ensemble de symboles possibles portés par le premier signal (tx1) transmis ;

- l'émission d'une paire (tx1^j ; tx2^i) d'estimations sélectionnées en tant qu'estimations révisées (tx1^' ; tx2^') du symbole porté respectivement par les premier et second signaux (tx1; tx2) transmis.

2. Procédé selon la revendication 1, dans lequel chaque étape de formation d'un ensemble de signaux de reconstruction de l'un des signaux transmis comprend la rotation de l'estimation de symbole qui doit être soustraite du signal (rx1 ; rx2) respectif reçu par un premier coefficient ($\varphi_{11}$, $\varphi_{12}$, $\varphi_{21}$, $\varphi_{22}$) de rotation respectif pour l'annulation, et la rotation du résultat de la soustraction par un second coefficient (($\varphi_{11r}$, $\varphi_{12r}$, $\varphi_{21r}$, $\varphi_{22r}$) respectif.

3. Procédé selon l'une quelconque des revendications précédentes, dans lequel, si l'un des deux signaux (tx1 ; tx2) transmis comprend des symboles pilotes dans sa séquence de symboles portés, au temps symbole d'un symbole pilote reçu, la paire (tx1^j ; tx2^i) sélectionnée pour l'émission comprend ledit symbole pilote en tant qu'estimation révisée (tx1^', tx2^') du symbole porté par le signal transmis respectif.

4. Procédé selon l'une quelconque des revendications précédentes, dans lequel la paire d'estimations (tx1^j ; tx2^i) sélectionnée pour l'émission est celle ayant la valeur minimum de la somme (met1 ; met2) des erreurs quadratiques résiduelles du dispositif d'écrêtage associées aux :

- estimations (tx1^c1$_i$, tx1^c2$_i$) du symbole porté par le premier signal (tx1) transmis, écrêté sur la base des signaux reconstruits (tx1c1$_i$, tx1c2$_i$) respectifs, auxquels correspond l'estimation (tx1^j) du symbole porté par le premier signal (tx1) transmis de la paire sélectionnée, ou bien
- estimations (tx2^c1$_j$, tx2^c2$_j$) du symbole porté par le second signal (tx2) transmis, écrêté sur la base des signaux reconstruits ((tx2c1$_j$, tx2c2$_j$) respectifs, auxquels correspond l'estimation (tx2^i) du symbole porté par le second signal (tx2) transmis de la paire sélectionnée,

l'étape de sélection comprenant le calcul de ladite erreur résiduelle pour chaque estimation effectuée qui correspond à une estimation de symbole d'une paire choisie et au calcul de ladite somme des erreurs quadratiques résiduelles pour chaque paire choisie.

5. Procédé selon la revendication précédente, dans lequel la valeur de ladite somme des erreurs quadratiques calculées est émise en même temps que la paire d'estimations révisées sélectionnée, de manière à fournir des informations utiles pour la correction des erreurs à un correcteur d'erreur en aval.

6. Procédé selon l'une quelconque des revendications précédentes, dans lequel un coefficient de rotation pour l'annulation de la première série de coefficients, utilisé pour un ensemble (tx1c1) de signaux reconstruits relatifs à un temps symbole donné t+1, est mis à jour pour être utilisé avec le temps symbole suivant (t+2) en soustrayant du coefficient ($\varphi_{11t}$) le produit de l'erreur résiduelle du dispositif d'écrêtage (err11i) associé à un signal reconstruit (tx1c1i) traité en utilisant ledit coefficient (($\varphi_{11t}$) et avec l'estimation respective(tx1^c1i) du symbole porté par le signal (tx2) transmis respectif, les deux étant relatifs au temps symbole (t+1) donné ;

dans lequel ladite estimation (tx1^c1i) est une estimation correspondant à l'estimation de symbole (tx1^j) du signal (tx1) transmis de la paire sélectionnée comme étant la paire d'estimations révisées,

et dans lequel ladite erreur résiduelle est multipliée par l'autre estimation de symbole (tx2^i) de la paire choisie.

7. Procédé selon la revendication précédente, **caractérisé en ce que** les coefficients de rotation de phase pour l'annulation sont émis en même temps que la paire sélectionnée des estimations révisées, de manière à fournir un bloc de reconstruction et d'estimation (DMR) de la liaison radio avec des coefficients de rotation de phase mis à jour pour l'annulation, aptes à améliorer la fiabilité des estimations initiales successives émises par ledit bloc (DMR).

8. Procédé selon l'une quelconque des revendications précédentes, dans lequel les coefficients de rotation de phase ($\varphi_{11r}$, $\varphi_{12r}$, $\varphi_{21r}$, $\varphi_{22r}$) de la seconde série de coefficients sont mis à jour grâce à un procédé qui comprend le calcul d'une corrélation, de telle sorte qu'un coefficient ($\varphi r_t$) utilisé pour un temps symbole t+1 donné est mis à jour, afin d'être utilisé pour le temps symbole suivant (t+2), en soustrayant dudit coefficient le produit de l'erreur résiduelle du dispositif d'écrêtage (err11i) associé à un signal reconstruit (txcli) traité en utilisant ledit coefficient ($\varphi_{11t}$) et avec l'estimation (tx1^c1i) respective du symbole porté par le signal (tx2) transmis respectif, les deux étant relatifs au temps symbole donné (t+1) ;

dans lequel ladite estimation (tx1^c1i) est une estimation correspondant à l'estimation de symbole (tx1^j) du signal (tx1) transmis de la paire sélectionnée comme étant la paire d'estimations révisées,

et dans lequel ladite erreur du dispositif d'écrêtage (err11i) est multipliée par ledit signal reconstruit (tx1c1i).

9. Appareil de révision (100) destiné à réviser :

- une première estimation initiale (tx1^) d'un symbole porté par un premier signal (tx1) transmis par une première antenne de transmission (AT1) d'une liaison relai radio d'un système MIMO (Entrées Multiples, Sorties Multiples), LOS (à visibilité directe), à plage optique, et
- une seconde estimation initiale (tx2^) d'un symbole porté par un second signal (tx2) transmis par une seconde antenne de transmission (AT2) de la liaison relai radio d'un système MIMO LOS

les deux signaux (txl, tx2) étant transmis en interférence mutuelle totale sur la liaison relai radio du système MIMO LOS,

la première estimation initiale (tx1^) étant en sortie d'un dispositif de décision d'une première branche (c1) respective pour la réception et la reconstruction de la liaison, à la suite d'un processus de démodulation et de reconstruction du premier signal (tx1) transmis grâce à une annulation mutuelle d'un premier signal (rx1) reçu sur une première antenne de réception (AR1) de la liaison radio en amont de la première branche de réception (c1) et d'un second signal (rx2) reçu par une seconde antenne de réception (AR2) de la liaison radio, dans lequel les signaux (rx1, rx2) reçus comprennent chacun ledit premier signal (tx1) et ledit second signal (tx2) transmis en totale interférence,

la seconde estimation initiale (tx2^) étant émise par un dispositif de décision d'une seconde branche (c2) respective pour la réception et la reconstruction en aval de la seconde antenne de réception (AR2) de la liaison radio, à la suite d'un processus de démodulation et de reconstruction du second signal (tx2) transmis, grâce à une annulation mutuelle du second signal (rx2) reçu par la seconde antenne (AR2) et du premier signal (rx1) reçu,

**caractérisé en ce qu'**il comprend :

- un module (110) pour la construction d'un ensemble élargi (tx1^ ; tx2^) d'estimations possibles du symbole porté par le signal (tx1 ; tx2) transmis pour chaque estimation de symbole (tx1^ ; tx2^) du signal (txl ; tx2) transmis reçu au niveau de l'entrée ; chaque ensemble élargi (tx1^ ; tx2^) comprenant le symbole estimé (tx1^ ; tx2^) reçu au niveau de l'entrée et au moins les huit symboles adjacents à celui-ci dans la constellation de modulation ;
- une mémoire comprenant des registres pour stocker les divers éléments traités et/ou nécessaires pour les opérations de traitement ;
- un noeud d'annulation (120) pour recevoir, au niveau de son entrée :

  ▪ chaque signal (rx1, rx2) reçu et démodulé venant d'une antenne (AR1, AR2) associée et un bloc de réception/démodulation associé d'une branche de réception et de reconstruction (c1, c2) respective ;
  ▪ chaque ensemble (tx1^ ; tx2^) d'estimations possibles du symbole porté par l'un des signaux (tx1, tx2) transmis, contenant une estimation initiale (tx1^ ; tx2^) respective du symbole transmis et les symboles adjacents respectifs dans la constellation de modulation ;

et pour fournir, au niveau de sa sortie, pour chaque signal (rx1 ; rx2) reçu :

■ un premier ensemble (tx1c1 ; tx1c2) respectif de signaux de reconstruction du premier signal (tx1) transmis, chacun étant reconstruit grâce à une annulation non linéaire effectuée par l'annulation du signal (rx1, rx2) reçu respectif d'un composant interférent (tx2), grâce à un symbole respectif de l'ensemble (tx2^) d'estimations possibles du symbole porté par le second signal (tx2) transmis ;

■ et un second ensemble (tx2cl ; tx2c2) respectif de signaux de reconstruction du second signal (tx2) transmis, chacun étant reconstruit grâce à une annulation non linéaire effectuée par l'annulation du signal (rx1, rx2) reçu respectif d'un composant interférent (tx1), grâce à un symbole respectif de l'ensemble (tx1^) d'estimations possibles du symbole porté par le premier signal (tx1) transmis ;

- un module d'écrêtage, pour fournir une estimation ($tx1\hat{}c1_i$ ; $tx2\hat{}c1_i$ ; $tx1\hat{}c2_i$ ; $tx2\hat{}c2_i$) du symbole de constellation associé à chaque signal reconstruit, grâce à une décision sur la base du signal reconstruit ($tx1c1_i$ ; $tx2c1_i$ ; $tx1c2_i$ ; $tx2c2_i$) respectif ;

- un module sélecteur pour sélectionner une paire (tx1^j ; tx2^i) de symboles de constellation possibles, un étant porté par le premier signal (tx1) transmis et un étant porté par le second signal (tx2) transmis, respectivement, la paire choisie comprenant :

  ○ un $j^{ieme}$ symbole (tx1^j) de l'ensemble élargi (tx1^) d'estimations possibles du symbole porté par le premier signal (tx1) transmis, qui correspond :

    ■ à la fois au symbole (tx1^c1i) écrêté sur la base du signal de reconstruction (tx1^c1i) du premier signal transmis, reconstruit en soustrayant du premier signal (rx1) reçu un $i^{ème}$ symbole (tx2^i) de l'ensemble (tx2^) d'estimations possibles du symbole porté par le second signal (tx2) transmis,
    ■ et au symbole (tx1^c2i) écrêté sur la base du signal de reconstruction ($tx1c2_i$) du premier signal (tx1) transmis, reconstruit en soustrayant du second signal (rx2) reçu ce même $i^{ème}$ symbole (tx2^i) de l'ensemble (tx2^) d'estimations possibles du symbole porté par le second signal (tx2) transmis ; et

  ■ un $i^{ieme}$ symbole (tx2^i) de l'ensemble élargi (tx2^) d'estimations possibles du symbole porté par le second signal (tx2) transmis, qui correspond :

    ■ à la fois au symbole ($tx2\hat{}c1_j$) écrêté sur la base du signal de reconstruction ($tx2\hat{}c1_j$) du second signal transmis, reconstruit en soustrayant du premier signal (rx1) reçu ce même $j^{eme}$ symbole (tx1^j) de l'ensemble (tx1^) d'estimations possibles du symbole porté par le premier signal (tx1) transmis,
    ■ et au symbole (tx2^c2j) écrêté sur la base du signal de reconstruction (tx2c2j) du second signal (tx2) transmis, reconstruit en soustrayant du second signal (rx2) reçu ce même $j^{eme}$ symbole (tx1^j) de l'ensemble de symboles possibles porté par le premier signal (tx1) transmis ;

- des sorties pour l'émission d'une paire (tx1^j ; tx2^j) choisie d'estimations en tant qu'estimations révisées (tx1^' ; tx2^') du symbole porté respectivement par les premier (tx1) et second (tx2) signaux transmis.

10. Appareil selon la revendication précédente, **caractérisé en ce que** ladite mémoire comprend des registres dans lesquels une première série de coefficients de rotation ($\varphi_{11}$, $\varphi_{12}$, $\varphi_{21}$, $\varphi_{22}$) pour l'annulation et une seconde série de coefficients de rotation ($\varphi_{11r}$, $\varphi_{12r}$, $\varphi_{21r}$, $\varphi_{22r}$) sont enregistrés ;
et **en ce que** le noeud d'annulation pour former des signaux de reconstruction de l'un des signaux transmis comprend un premier rotateur respectif pour mettre en rotation l'estimation de symbole qui doit être soustrait du signal (rx1 ; rx2) reçu respectif par un premier coefficient de rotation ($\varphi_{11}$, $\varphi_{12}$, $\varphi_{21}$, $\varphi_{22}$) respectif pour l'annulation, et un second rotateur respectif pour mettre en rotation le résultat de la soustraction par un second coefficient de rotation ($\varphi_{11r}$, $\varphi_{12r}$, $\varphi_{21r}$, $\varphi_{22r}$) respectif.

11. Appareil selon l'une quelconque des revendications 9 et 10, **caractérisé en ce qu'**il est conçu pour être utilisé dans des relais radio dans lesquels l'un des deux signaux (txl ; tx2) transmis comprend des symboles pilotes dans sa séquence de symboles portés et **en ce que**, pour un temps symbole auquel l'un desdits symboles pilotes est présent, le module sélecteur est adapté pour sélectionner une paire d'estimations de symbole pour une émission comprenant ledit symbole pilote en tant qu'estimation révisée du symbole porté par le signal transmis respectif.

12. Appareil selon l'une quelconque des revendications 9 à 11, comprenant un module pour calculer, pour chaque paire d'estimations (tx1^j ; tx2^i) sélectionnée, la somme des erreurs quadratiques du dispositif d'écrêtage associées avec :

- les estimations (tx1^c1$_i$, tx1^c2$_i$) du symbole porté par le premier signal (tx1) transmis, décidé sur la base de signaux reconstruits (tx1^c1$_i$, tx1^c2$_i$) respectifs, auxquels correspond l'estimation (tx1^j) du symbole porté par le premier signal (tx1) transmis de la paire choisie, ou

- les estimations (tx2^c1j ; tx2^c2j) du symbole porté par le second signal (tx2) transmis, décidé sur la base de signaux reconstruits (tx2c1$_j$, tx2c2$_j$) respectifs, auxquels correspond l'estimation (tx2^i) du symbole porté par le second signal (tx2) transmis de la paire choisie,

et en ce que le module sélecteur sélectionnée l'émission de la paire d'estimations choisie avec la valeur minimum de la somme (met1 ou met2) des erreurs quadratiques résiduelles au niveau du dispositif de décision.

13. Appareil selon la revendication précédente, comprenant des sorties pour l'émission de la valeur de ladite somme des erreurs quadratiques calculées, en même temps que la paire d'estimations révisées sélectionnée, de manière à fournir des informations utiles pour la correction des erreurs à un correcteur d'erreur en aval de l'appareil.

$$Fig. 1$$ PRIOR ART

$$Fig. 2$$ PRIOR ART

$\mathcal{F}ig.\ 3$

$\mathcal{F}ig.\ 4$

Fig. 5

Fig. 8

| tx1^ | tx1^1 | tx1^2 | tx1^3 | tx1^4 | tx1^5 | tx1^6 | tx1^7 | tx1^8 | tx1^9 |
| tx2^ | tx2^1 | tx2^2 | tx2^3 | tx2^4 | tx2^5 | tx2^6 | tx2^7 | tx2^8 | tx2^9 |

| $tx1^1$ → | tx1^ | Adj. Symb1 | Adj. Symb 2 | Adj. Symb 3 | Adj. Symb 4 | Adj. Symb 5 | Adj. Symb 6 | Adj. Symb 7 | Adj. Symb 8 |

| $tx2^1$ → | tx2^ | Adj. Symb1 | Adj. Symb 2 | Adj. Symb 3 | Adj. Symb 4 | Adj. Symb 5 | Adj. Symb 6 | Adj. Symb 7 | Adj. Symb 8 |

$$\mathcal{F}ig.\ 6$$

| tx1c1 → | $tx1c1_1$ | $tx1c1_2$ | $tx1c1_3$ | $tx1c1_4$ | $tx1c1_5$ | $tx1c1_6$ | $tx1c1_7$ | $tx1c1_8$ | $tx1c1_9$ |
| tx2c1 → | $tx2c1_1$ | $tx2c1_2$ | $tx2c1_3$ | $tx2c1_4$ | $tx2c1_5$ | $tx2c1_6$ | $tx2c1_7$ | $tx2c1_8$ | $tx2c1_9$ |

| tx1c2 → | $tx1c2_1$ | $tx1c2_2$ | $tx1c2_3$ | $tx1c2_4$ | $tx1c2_5$ | $tx1c2_6$ | $tx1c2_7$ | $tx1c2_8$ | $tx1c2_9$ |
| tx2c2 → | $tx2c2_1$ | $tx2c2_2$ | $tx2c2_3$ | $tx2c2_4$ | $tx2c2_5$ | $tx2c2_6$ | $tx2c2_7$ | $tx2c2_8$ | $tx2c2_9$ |

$$\mathcal{F}ig.\ 7$$

| $tx1^1c1$ → | $tx1c1_1$ | $tx1c2_2$ | $tx1c2_3$ | $tx1c2_4$ | $tx1c2_5$ | $tx1c2_6$ | $tx1c2_7$ | $tx1c2_8$ | $tx1c2_9$ |
| $tx2^1c1$ → | $tx2c1_1$ | $tx2c2_2$ | $tx2c2_3$ | $tx2c2_4$ | $tx2c2_5$ | $tx2c2_6$ | $tx2c2_7$ | $tx2c2_8$ | $tx2c2_9$ |
| err11 → | $err11_1$ | $err11_2$ | $err11_3$ | $err11_4$ | $err11_5$ | $err11_6$ | $err11_7$ | $err11_8$ | $err11_9$ |
| err21 → | $err21_1$ | $err21_2$ | $err21_3$ | $err21_4$ | $err21_5$ | $err21_6$ | $err21_7$ | $err21_8$ | $err21_9$ |

Sliced symbols and moduli of the slicing residual errors for the signals reconstructed from the first signal received rx1 on the first reception branch c1

$$\mathcal{F}ig.\ 9a$$

| | J=2 | | | | | | | I=8 | |
|---|---|---|---|---|---|---|---|---|---|
| tx1^ | $tx1^\wedge_1$ | $tx1^\wedge_2$ | $tx1^\wedge_3$ | $tx1^\wedge_4$ | $tx1^\wedge_5$ | $tx1^\wedge_6$ | $tx1^\wedge_7$ | $tx1^\wedge_8$ | $tx1^\wedge_9$ |
| tx2^ | $tx2^\wedge_1$ | $tx2^\wedge_2$ | $tx2^\wedge_3$ | $tx2^\wedge_4$ | $tx2^\wedge_5$ | $tx2^\wedge_6$ | $tx2^\wedge_7$ | $tx2^\wedge_8$ | $tx2^\wedge_9$ |
| tx1c1 | $tx1c1_1$ | $tx1c1_2$ | $tx1c1_3$ | $tx1c1_4$ | $tx1c1_5$ | $tx1c1_6$ | $tx1c1_7$ | $tx1c1_8$ | $tx1c1_9$ |
| tx2c2 | $tx2c1_1$ | $tx2c1_2$ | $tx2c1_3$ | $tx2c1_4$ | $tx2c1_5$ | $tx2c1_6$ | $tx2c1_7$ | $tx2c1_8$ | $tx2c1_9$ |
| tx1^c1 | $tx1^\wedge c1_1$ | $tx1^\wedge c1_2$ | $tx1^\wedge c1_3$ | $tx1^\wedge c1_4$ | $tx1^\wedge c1_5$ | $tx1^\wedge c1_6$ | $tx1^\wedge c1_7$ | $tx1^\wedge c1_8$ | $tx1^\wedge c1_9$ |
| tx2^c1 | $tx2^\wedge c1_1$ | $tx2^\wedge c1_2$ | $tx2^\wedge c1_3$ | $tx2^\wedge c1_4$ | $tx2^\wedge c1_5$ | $tx2^\wedge c1_6$ | $tx2^\wedge c1_7$ | $tx2^\wedge c1_8$ | $tx2^\wedge c1_9$ |
| err11 | $err11_1$ | $err11_2$ | $err11_3$ | $err11_4$ | $err11_5$ | $err11_6$ | $err11_7$ | $err11_8$ | $err11_9$ |
| err21 | $err21_1$ | $err21_2$ | $err21_3$ | $err21_4$ | $err21_5$ | $err21_6$ | $err21_7$ | $err21_8$ | $err21_9$ |
| tx1c2 | $tx1c2_1$ | $tx1c2_2$ | $tx1c2_3$ | $tx1c2_4$ | $tx1c2_5$ | $tx1c2_6$ | $tx1c2_7$ | $tx1c2_8$ | $tx1c2_9$ |
| tx2c2 | $tx2c2_1$ | $tx2c2_2$ | $tx2c2_3$ | $tx2c2_4$ | $tx2c2_5$ | $tx2c2_6$ | $tx2c2_7$ | $tx2c2_8$ | $tx2c2_9$ |
| tx1^c2 | $tx1^\wedge c2_1$ | $tx1^\wedge c2_2$ | $tx1^\wedge c2_3$ | $tx1^\wedge c2_4$ | $tx1^\wedge c2_5$ | $tx1^\wedge c2_6$ | $tx1^\wedge c2_7$ | $tx1^\wedge c2_8$ | $tx1^\wedge c2_9$ |
| tx2^c2 | $tx2^\wedge c2_1$ | $tx2^\wedge c2_2$ | $tx2^\wedge c2_3$ | $tx2^\wedge c2_4$ | $tx2^\wedge c2_5$ | $tx2^\wedge c2_6$ | $tx2^\wedge c2_7$ | $tx2^\wedge c2_8$ | $tx2^\wedge c2_9$ |
| err12 | $err12_1$ | $err12_2$ | $err12_3$ | $err12_4$ | $err12_5$ | $err12_6$ | $err12_7$ | $err12_8$ | $err12_9$ |
| err22 | $err22_1$ | $err22_2$ | $err22_3$ | $err22_4$ | $err22_5$ | $err22_6$ | $err22_7$ | $err22_8$ | $err22_9$ |

Fig. 9b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2922193 A

- US 2008025442 A1